# EUROPÄISCHE PATENTSCHRIFT

(11) **EP 4 409 870 B1**
(45) Veröffentlichungstag und Bekanntmachung des Hinweises auf die Patenterteilung: **25.02.2026**
(21) Anmeldenummer: 22798261.8
(22) Anmeldetag: 29.09.2022
(51) Int. Cl.: G07D 7/00, G07D 7/20, H04N 1/32, G07D 7/004, G07D 7/206

(54) **SICHERHEITSLÖSUNG MIT EINEM DIGITALEN BILD MIT INTEGRIERTEM SICHERHEITSMERKMAL SOWIE EINEM BILDWANDLUNGSVERFAHREN UND EINER BILDWANDLUNGSVORRICHTUNG ZU SEINER HERSTELLUNG**
SECURITY SOLUTION WITH A DIGITAL IMAGE WITH AN INTEGRATED SECURITY FEATURE, AND AN IMAGE CONVERSION METHOD AND AN IMAGE CONVERSION DEVICE FOR ITS PRODUCTION
SOLUTION DE SÉCURITÉ AVEC UNE IMAGE NUMÉRIQUE AVEC UNE FONCTION DE SÉCURITÉ INTÉGRÉE, ET UN PROCÉDÉ DE CONVERSION D'IMAGE ET UN DISPOSITIF DE CONVERSION D'IMAGE POUR SA PRODUCTION

(30) Priorität: 01.10.2021 DE 102021125559
(43) Veröffentlichungstag der Anmeldung: 07.08.2024
(73) Patentinhaber: Mühlbauer ID Services GmbH, 93426 Roding (DE)
(72) Erfinder: KUSIN, Dieter, 92224 Amberg (DE); EDERER, Martin, 93483 Pösing (DE); BRUNNER, Anton, 93444 Bad Kötzting (DE); WANJEK, Michael, 93149 Nittenau (DE); STEMICK, Johannes, 58135 Hagen (DE); DIMPFL, Martin, 93462 Lam (DE)
(74) Vertreter: Platzöder Patentanwaltsgesellschaft mbH
(86) Internationale Anmeldenummer: PCT/EP2022/077099
(87) Internationale Veröffentlichungsnummer: WO 2023/052493

(56) Entgegenhaltungen:
- WO-A1-2006/015733
- US-A1- 2007 211 913
- US-A1- 2010 260 985
- US-A1- 2012 091 312
- US-A1- 2016 096 392
- US-A1- 2017 124 795

## Beschreibung

Die vorliegende Erfindung betrifft ein digitales Bild mit integriertem Sicherheitsmerkmal, ein Bildwandlungsverfahren und eine Bilderfassungsvorrichtung zur Integration eines Sicherheitsmerkmals in ein Quellbild, sowie ein Computerprogramm oder Computerprogrammprodukt zur Ausführung des Bildwandlungsverfahrens.

Zu den Möglichkeiten, Objekte mit Sicherheitsmerkmalen als Fälschungsschutz auszustatten, gehört insbesondere die Möglichkeit, das Objekt mit einem schwer zu fälschenden Bild zu versehen. Zu den Objekten, bei denen diese Möglichkeit regelmäßig Anwendung findet, gehören insbesondere personalisierte Dokumente.

Aus dem Stand der Technik ist eine Vielzahl verschiedener Typen von personalisierten Dokumenten, insbesondere in Kartenform oder Buchform bekannt. So gehören beispielsweise buchartige Passdokumente oder einzelne Seiten davon (z.B. die sog. "Pass-Inhaberseite" oder Papierseiten), Ausweiskarten und viele Arten von personalisierten Chipkarten, etwa Bankkarten, Kreditkarten, Ausweiskarten, Mitgliedskarten, Zugangsberechtigungskarten usw. oder personenbezogene (meist kartenförmige) Etiketten jeweils zur Gruppe der personalisierten Dokumente.

Dabei bedeutet "Personalisierung" bzw. "personalisiert", dass das entsprechende Dokument eine dokumentenindividuelle Information enthält oder trägt, die typischerweise einem Inhaber des Dokuments zugeordnet ist. So kann die Information etwa in einigen Fällen den Inhaber identifizieren, beispielsweise mittels seines Namens, seines Passbilds, einer Identitätsnummer oder anderer Merkmale, die auf dem Dokument aufgedruckt, anderweitig aufgebracht oder eingebracht oder in ihm, insbesondere in Form von Daten, gespeichert sind. Die Personalisierung kann dabei insbesondere individuell auf eine einzelne Person bezogen sein oder aber auch auf eine bestimmte begrenzte Gruppe von Personen, beispielsweise Mitarbeiter eines Unternehmens.

Insbesondere dann, wenn eine Objektoberfläche, auf der eine Personalisierungsinformation vorzusehen ist, aus einem Polymerwerkstoff besteht, stellt Laserbeschriftung eine bekannte Möglichkeit zum Aufbringen der Personalisierungsinformationen auf die Objektoberfläche dar. Dabei kann mittels eines Laserstrahls die Objektoberfläche selektiv so bearbeitet werden, dass an den Stellen, an denen der Laserstrahl auf die Objektoberfläche auftrifft, eine chemische Umwandlung des Polymerwerkstoffs erfolgt, die mit einer Farbänderung einhergeht. So lassen sich insbesondere verschiedene Grauwerte erzeugen. Dies kann insbesondere dazu genutzt werden, ein Grauwertbild, wie etwa ein Passfoto, auf der Objektoberfläche zu erzeugen.

Da Laserbeschriftungsanlagen kommerziell verfügbar sind, gelingt es auch kriminellen Strukturen regelmäßig, in ihren Besitz zu gelangen und mit ihrer Hilfe Fälschungen von Objekten, insbesondere von personalisierten Dokumenten oder anderen Sicherheitsdokumenten, zu erzeugen und in Umlauf zu bringen. Zu den Möglichkeiten, solche Fälschungen zu erzeugen, gehört es insbesondere, eine bereits auf die Objektoberfläche aufgebrachte Laserbeschriftung durch zusätzliche Laserbestrahlung oder durch Überdecken mittels einer neu hinzugefügten Fremdsubstanz zu verändern.

US 2007/211913 A1 offenbart eine Bildverarbeitungsvorrichtung mit einer Rasterverarbeitungseinheit, die eine Position einer Rasterzelle, die auf ein Eingangsbild angewendet wird, in mindestens einer Richtung einer Hauptabtastrichtung und einer untergeordneten Abtastrichtung des Eingangsbildes um einen ersten Verschiebungsbetrag verschiebt, der sich entsprechend der angewendeten Position der Rasterzelle ändert, wenn eine Rasterverarbeitung an dem Eingangsbild unter Verwendung der Rasterzelle durchgeführt wird.

US 2017/124795 A1 offenbart ein System, Verfahren und Software, die bei der Identifizierung der Quelle einer unbefugten Veröffentlichung eines Dokuments, wie z. B. einer Veröffentlichung eines Schecks, einer Quittung oder eines anderen Dokumententyps, helfen.

US 2010/260985 A1 offenbart ein Verfahren zur Herstellung eines Polymerschichtverbundes, wobei der Polymerschichtverbund eine Mehrzahl von Polymerschichten aufweist und wobei zumindest eine Polymerschicht eine lasersensitive Komponente enthält.

Es ist eine Aufgabe der Erfindung, den Fälschungsschutz von Bildern, insbesondere von Bildern zur Personalisierung von Objekten, weiter zu verbessern.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Insgesamt wird im Weiteren eine umfassende Sicherheitslösung zum Fälschungsschutz für digitale Bilder vorgestellt, die zusätzlich zu verschiedenen Aspekten einer Lösung zum Integrieren eines Sicherheitsmerkmals in ein damit zu schützendes digitales Bild und einem solchen geschützten digitalen Bild selbst auch ein Verfahren, eine Vorrichtung und/oder ein Computerprogramm umfasst, die jeweils zur Verifikation eines solchen geschützten digitalen Bildes verwendet werden können.

Ein erster Aspekt der Sicherheitslösung betrifft ein, insbesondere computer-implementiertes, Bildwandlungsverfahren zur Integration eines Sicherheitsmerkmals in ein digitales Quellbild zur Erzeugung eines durch das integrierte Sicherheitsmerkmal gesicherten Zielbilds. Das Bildwandlungsverfahren weist auf:
(i) Erfassen von Quellbilddaten, die ein mittels des Sicherheitsmerkmals zu schützendes digitales Quellbild repräsentieren, das in einem Raster, insbesondere einer rechtwinkligen Pixelmatrix, aus geraden zueinander parallelen Bildpunktreihen angeordnete Bildpunkte (Pixel) mit jeweils zumindest einem Bildpunktwert, z.B. Grau- oder Farbwert, je Bildpunkt aufweist;
(ii) Generieren von Zwischenbilddaten, die ein Zwischenbild repräsentieren, das sich aus dem Quellbild durch Anwenden einer Verzerrungsvorschrift ergibt, gemäß der je Bildpunktreihe des Quellbilds die jeweiligen Bildpunktwerte von, insbesondere sämtlichen, Bildpunkten der Bildpunktreihe innerhalb des Rasters entlang einer zu der Bildpunktreihe gewinkelt, insbesondere orthogonal, verlaufenden Richtung auf einen dem jeweiligen Bildpunkt durch die Verzerrungsvorschrift bestimmten oder bestimmbaren jeweils anderen Bildpunkt des Rasters so übertragen werden, dass die Anordnung dieser anderen Bildpunkte im Raster eine Transversalwellenform aufweist;
(iii) Erzeugen von Zielbilddaten, die das Zielbild repräsentieren, wobei:
   (iii-1) das Zwischenbild bildpunktreihenmäßig abgetastet wird, um je Bildpunktreihe des Zwischenbilds eine Folge von gemäß der Abtastung aufeinanderfolgenden Bildpunkten zu definieren, deren Bildpunktwerte sich aus der Übertragung von entsprechenden Bildpunktwerten aus dem Quellbild gemäß der Verzerrungsvorschrift ergeben haben;
   (iii-2) jeder Bildpunkt der Folge in einen dazu jeweils korrespondierenden Bildpunkt des Zielbilds transformiert wird, indem ausgehend von seiner Position in dem Zwischenbild durch Kompensation der durch Anwenden der Verzerrungsvorschrift bei der Generierung des Zwischenbilds erlittenen Verzerrung seine Position in dem Zielbild festgelegt wird, sodass die Anordnung der jeweiligen Bildpunkte jeder Folge in dem Zielbild einen transversalwellenförmigen Wellenzug darstellt; und
   (iii-3) das integrierte Sicherheitsmerkmal durch die Wellenzüge, insbesondere durch deren Form, Größe und/oder Anordnung innerhalb des Zielbilds, definiert ist.

Unter dem Begriff "Erfassen" der Quellbilddaten, wie hierin verwendet, kann insbesondere ein sensorisches Erzeugen des Quellbilds, etwa unter Verwendung zumindest eines Bildsensors (Kamera), oder ein Empfangen oder Auslesen aus einem Speicher von bereits existierenden Quellbilddaten zu verstehen sein.

Unter dem Begriff "Bildpunktreihe", wie hierin verwendet, kann insbesondere eine Zeile oder Spalte einer das Raster bildenden rechtwinkligen zweidimensionalen Pixelmatrix zu verstehen sein.

Unter dem Begriff "Transversalwelle", wie hierin verwendet, ist eine Wellenform zu verstehen, bei der die Schwingung der Welle senkrecht zu ihrer Ausbreitungsrichtung erfolgt. Unter dem Begriff "transversalwellenförmig" ist entsprechend eine Wellenform einer solchen Transversalwelle zu verstehen. Der Begriff ist von einer Longitudinalwelle bzw. Longitudinalwellenform abzugrenzen, bei der die Schwingung entlang der Ausbreitungsrichtung erfolgt.

Unter den hierin verwendeten Begriffen "abtasten", "abgetastet" (und Abwandlungen hiervon) in Bezug auf ein Bild bzw. eine Bildpunktreihe davon, ist jegliche Art des Erfassens von Bildwerten eines Bildes, insbesondere des Zwischenbilds, zu verstehen. Dazu gehören insbesondere ein Messen, Auslesen oder Empfangen von Daten, welche die Bildwerte repräsentieren. Insbesondere kann das Abtasten seriell entlang einer Abtastrichtung erfolgen, so dass nacheinander die jeweiligen Bildpunktwerte der entlang der Abtastrichtung (Scanrichtung) nacheinander erreichten abzutastenden Bildpunkte, im Falle einer Abtastung einer Bildpunktreihe also die Bildpunktwerte der nacheinander erreichten abzutastenden Bildpunkte der Bildpunktreihe, erfasst werden.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier verwendet wird, ist im Sinne von "zwei oder mehr" zu verstehen.

Unter dem gegebenenfalls hierin verwendeten Begriff "konfiguriert" oder "eingerichtet" eine bestimmte Funktion zu erfüllen, (und jeweiligen Abwandlungen davon) ist im Sinne der Erfindung zu verstehen, dass die entsprechende Vorrichtung bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das Konfigurieren mittels einer Auswahl einer dieser Konfigurationen bzw. Betriebsmodi erfolgen kann.

Das Bildwandlungsverfahren gemäß dem ersten Aspekt ist somit in der Lage, eine das Quellbild darstellende Rastergrafik in eine durch das Zielbild bzw. die Zielbilddaten repräsentierte Grafik zu umwandeln, bei der die Bildpunkte in einer Mehrzahl von parallelen Transversallwellenzügen angeordnet sind. Eine solche Grafik ist wesentlich schwerer zu erstellen, als eine herkömmliche Rastergrafik. Insbesondere sind auch Personalisierungsanlagen, insbesondere Laserbeschriftungsanlagen, die ein solches nicht einer Rastergrafik entsprechendes Zielbild überhaupt in ausreichend hoher Bildqualität herstellen könnten, nicht ohne weiteres für Fälscher verfügbar. Somit kann durch das Bildwandlungsverfahren die Fälschungssicherheit eines Quellbildes durch Integration des durch die Transversalwellenzüge definierten Sicherheitsmerkmals erhöht werden.

Nachfolgend werden zunächst verschiedene beispielhafte Ausführungsformen des Bildwandlungsverfahrens beschrieben, die jeweils, soweit dies nicht ausdrücklich ausgeschlossen wird oder technisch unmöglich ist, beliebig miteinander sowie mit den weiteren beschriebenen anderen Aspekten der Sicherheitslösung kombiniert werden können.

Das durch die Quellbilddaten repräsentierte Quellbild kann insbesondere eine Fotographie einer Person oder einer oder mehrerer ihrer Körperregionen, insbesondere des Gesichts oder eines Ausschnitts davon, repräsentieren. Das Quellbild kann insbesondere einen Ausschnitt aus einem größeren Bild repräsentieren.

Die Verzerrungsvorschrift kann insbesondere für alle Bildreihen, auf die sie angewandt wird, gleich sein.

Bei einigen Ausführungsformen weist das Bildwandlungsverfahren des Weiteren ein Erzeugen eines physischen Abbilds des Zielbilds auf einer Oberfläche eines Substrats auf, wobei das Abbild des Zielbilds durch serielles Generieren von Bildpunkten auf dem Substrat erzeugt wird, indem, um dabei eine Serie von Bildpunkten auf dem Substrat zu generieren, die zu einer jeweiligen Folge von Bildpunkten des Zielbilds korrespondiert, diese Bildpunkte der Serie auf dem Substrat entsprechend der durch die Folge definierten Bildpunktreihenfolge der korrespondierenden Bildpunkte des Zielbilds erzeugt werden. Das Substrat kann insbesondere eine Dokumentenseite eines Dokuments, etwa eines personalisierten bzw. zu personalisierenden Dokuments, wie etwa eines Ausweisdokuments, sein. Somit lässt sich das Verfahren neben der Bildwandlung auch zur Erzeugung eines physischen Abbilds des Zielbilds und somit insbesondere zum Versehen eines Objekts mit einer das Zielbild ganz oder teilweise enthaltenden Personalisierung einsetzen.

Bei einigen dieser Ausführungsformen erfolgt das Erzeugen des physischen Abbilds des Zielbilds auf dem Substrat mittels Laserbeschriftung, bei der sequenziell mithilfe eines Laserstrahls die Bildpunkte des Abbilds auf dem Substrat generiert werden. Auf diese Weise ist es möglich, unter Nutzung bewährter Beschriftungstechnologie die neuartige verfahrensgemäße Personalisierung durchzuführen, insbesondere auch mit hoher Bildauflösung.

Bei einigen solcher Ausführungsformen werden die verschiedenen Positionen der Serie, an denen der Laserstrahl zur Generierung der Bildpunkte des Abbilds auf dem Substrat auftrifft, mittels variabler Ablenkung des Laserstrahls in einem spiegelbasierten Lasergalvanometer angesteuert. Die Verwendung solcher Lasergalvanometer kann in verschiedener Hinsicht vorteilhaft sein. Insbesondere sind damit hohe Präzision und Auflösungen sowie trotz serieller Bildpunkterzeugung auch hohe Prozessgeschwindigkeiten erreichbar. Auch kann der erforderliche Bauraum klein gehalten werden.

Außerdem bieten solche Lasergalvanometer regelmäßig die Möglichkeit, etwaige Verzerrungen der zu erzeugenden Beschriftung, die insbesondere durch unebene Objektoberflächen oder Abbildungsfehler einer Optik des Lasergalvanometers bedingt sein können, mittels Korrekturinformationen gezielt zu kompensieren bzw. korrigieren, um solche Verzerrungen zumindest teilweise zu kompensieren. Dabei werden gezielt die Spiegel des Lasergalvanometers mit einem, in den Korrekturinformationen festgelegten, Offsetverlauf angesteuert so dass prinzipiell jede mögliche Substratform verzerrungsfrei mit derselben Beschriftung versehen werden kann. Diese Möglichkeit von vielen Lasergalvanometern kann nun - insbesondere im Sinne von "Dual-use" - im Rahmen des Bildwandlungsverfahrens insbesondere dazu genutzt werden, um zur Generierung des Zielbilds die Kompensation der durch Anwenden der Verzerrungsvorschrift bei der Generierung des Zwischenbilds erlittenen Verzerrungen zu bewerkstelligen. Die Korrekturinformationen können dann insbesondere selbst als die Zielbilddaten angesehen werden, da sie auf dem Wege der bei der Laserbeschriftung als Kompensation (Bias) zu verwendenden Korrekturen das Zielbild definieren und somit repräsentieren, welches durch die Laserbeschriftung als Abbild auf dem Substrat zu erzeugen ist.

Bei einigen Ausführungsformen wird zumindest ein, insbesondere alle, Spiegel des Lasergalvanometers zur Ansteuerung einer jeweiligen Position eines zu erzeugenden Bildpunkts des Abbilds auf dem Substrat mithilfe eines Steuersignals angesteuert, das in Abhängigkeit von der Kompensation definiert ist, die zu demjenigen Bildpunkt des Zwischenbilds bestimmt wurde, der zu dem zu erzeugenden Bildpunkt des Abbilds korrespondiert. So lässt sich die verfahrensgemäße Kompensation für jeden Bildpunkt erreichen.

Bei einigen Ausführungsformen wird ein Lasergalvanometer zur variablen Ablenkung des Laserstrahls verwendet, bei dem die Massenträgheit zumindest eines seiner zum Ablenken verwendeten Spiegel so groß ist, dass beim Abbilden der Wellenzüge des Zielbilds durch Generieren der Bildpunkte des Abbilds auf dem Substrat bei abrupten Richtungswechseln entlang des Verlaufs der Wellenzüge Abweichungen des Abbilds von dem Zielbild entstehen. Auf diese Weise entspricht das Abbild auf dem Substrat nur näherungsweise dem Zielbild, wobei die Abweichungen beider Bilder vor allem dort auftreten, wo der Verlauf von Wellenzügen im Zielbild abrupte Richtungswechsel aufweist, die aufgrund der Massenträgheit der Spiegel nicht 1:1 in das auf dem Substrat zu erzeugende Abbild übertragen werden. Insbesondere treten an solchen Stellen von Wellenzügen im Abbild typischerweise kleine Abrundungen gegenüber dem korrespondierenden Verlauf des jeweiligen Wellenzugs im Zielbild auf. Dieser nur sehr schwer durch Fälscher reproduzierbare Effekt kann zur weiteren Erhöhung der mit dem Bildwandlungsverfahren erreichbaren, durch das Sicherheitsmerkmal gelieferten Fälschungssicherheit genutzt werden.

Bei einigen Ausführungsformen wird die Anordnung der jeweiligen Bildpunkte jeder Folge in dem Zielbild so festgelegt, dass sie einen transversalwellenförmigen Wellenzug darstellt, der zumindest abschnittsweise periodisch ist. Er kann insbesondere zumindest abschnittsweise sinusförmig sein. Das Vorsehen einer solchen Periodizität ist insbesondere im Hinblick auf eine spätere Verifikation des Abbilds auf dem Substrat vorteilhaft, wenn dabei ein Verifikationsverfahren, wie das im Weiteren beschriebene, zum Einsatz kommen soll, das darauf beruht, periodische Strukturen in dem Abbild zu erkennen. Speziell sinusförmige Verläufe sind dabei insbesondere dann vorteilhaft, wenn im Rahmen der Verifikation eine (diskrete oder kontinuierliche) Fourier-Transformation zur Erkennung solcher periodischen Strukturen im Abbild eingesetzt werden soll oder kann.

Erfindungsgemäß wird die Anordnung der jeweiligen Bildpunkte jeder Folge in dem Zielbild so festgelegt, dass je zwei benachbarten Wellenzüge voneinander durch einen Zwischenraum separiert sind. Dabei wird das Substrat so gewählt oder bearbeitet, dass es eine Farbe aufweist, die sich vom Mittelwert der gemäß der Bildpunktwerte bestimmen Farben der Bildpunkte, die die Wellenzüge des Zielbilds bilden, so abhebt, dass benachbarte Wellenzüge optisch unterscheidbar sind. Das Separieren der Wellenzüge dient zum einen dazu, sie voneinander gut unterscheiden zu können, insbesondere optisch, etwa mit dem bloßen Auge oder unter Nutzung einer Bildvergrößerungsoptik, wie etwa einer Lupe oder eines Mikroskops. Zum anderen erleichtert dies aber auch das vorausgehend schon genannte Erkennen von periodischen Strukturen in dem Abbild auf dem Substrat, wobei das Vorsehen der Zwischenräume selbst dazu genutzt werden kann, weitere periodische Strukturen in dem Abbild vorzusehen, die (auch) als Basis für die spätere Verifikation genutzt werden können.

Bei einigen Ausführungsformen weist jeder der zu einer jeweiligen Folge resultierenden Wellenzüge zumindest zwei Wendepunkte auf. Dies fördert die Erkennbarkeit des durch die Wellenzüge dargestellten Wellenmusters und kann zudem die bei der Verifikation erreichbaren Zuverlässigkeit und/oder Genauigkeit, insbesondere beim Erkennen von periodischen Strukturen, erhöhen.

Bei einigen Ausführungsformen weist das Raster der Bildpunkte des Quellbilds Zeilen und Spalten auf, wobei sich die Auflösung der Zeilen von der Auflösung der Spalten unterscheidet. Dies ist insbesondere dann vorteilhaft, wenn - wie schon vorausgehend beschrieben - zwischen benachbarten Wellenzügen Zwischenräume vorgesehen werden. Durch Verwendung eines Rasters mit unterschiedlicher Auflösung kann der durch die Zwischenräume beanspruchte Platz, zumindest teilweise, durch eine entsprechend niedrigere Auflösung bzw. Punktdichte, insbesondere entlang der Transversalrichtung der Wellenzüge, so kompensiert werden, dass keine oder nur eine geringe tolerierbare Verzerrung des Zielbilds bzw. Abbilds auf dem Substrat auftritt.

Bei einigen dieser Ausführungsformen beträgt die Auflösung des Quellbilds in der orthogonal zu den Bildpunktreihen verlaufenden Richtung höchstens 70% der Auflösung in der entlang der Bildpunktreihen verlaufenden Richtung. Es hat sich bei Versuchen gezeigt, dass dieser Bereich besonders gut geeignet ist, da hier regelmäßig zum einen weitgehend verzerrungsfreie Zielbilder bzw. Abbilder auf dem Substrat erreichbar sind und zum anderen auch ausreichend große Zwischenräume zwischen benachbarten Wellenzügen im Hinblick auf eine eine zuverlässige und genaue Verifikation erzielt werden können.

Insbesondere beträgt bei einigen Ausführungsformen die Auflösung des Quellbilds in der orthogonal zu den Bildpunktreihen verlaufenden Richtung mindestens 200 Bildpunkte je Inch bzw. je 2,54cm (PPI). Dieser Bereich ist wiederum besonders günstig im Hinblick auf die genannten Ziele der Erreichung eines weitegehend verzerrungsfreien Zielbilds bzw. Abbilds und einer zuverlässigen und genauen Verifikation.

Bei einigen Ausführungsformen werden die Bildpunkte des Zielbilds so festgelegt, dass ihre jeweilige Ausdehnung entlang und orthogonal zur Transversalrichtung der Wellenzüge gleich ist. Dies kann insbesondere solche Fälle miteinschließen, bei denen die Bildpunkte des Quellbilds richtungsabhängig unterschiedliche Ausdehnungen aufweisen, beispielsweise wenn sie eine nicht-quadratische, rechteckige Form haben. Um nun gemäß dieser Ausführungsformen die gleiche Ausdehnung der Bildpunkte des Zielbilds in der Transversalrichtung und orthogonal dazu zu erreichen, können die jeweils korrespondierenden Bildpunkte des Quellbilds "beschnitten" werden, insbesondere so, dass der damit wegfallende Anteil der Bildpunkte zumindest näherungsweise dem durch den zugehörigen Zwischenraum im Zielbild beanspruchten Platzbedarf entspricht und somit eine resultierende Bildverzerrung (nicht mit der verfahrensgemäßen Verzerrung gemäß Verzerrungsvorschrift zu verwechseln) bei dem Übergang von Quellbild zum Zielbild zumindest weitgehend vermieden werden kann.

Bei einigen Ausführungsformen ist oder wird die Verzerrungsvorschrift so definiert, dass bei ihrem Anwenden auf Bildpunktreihen des Quellbilds zumindest für eine Untermenge der Bildpunktreihen der daraus jeweils resultierende Wellenzug in einem oder mehreren Abschnitten seines Verlaufs eine erste Wellenform und in zumindest einem anderen Abschnitt seines Verlaufs eine von der ersten Wellenform verschiedene zweite Wellenform aufweist. Insbesondere kann dies so erfolgen, dass die erste Wellenform oder die zweite Wellenform geradlinig ist oder zumindest einen geradlinigen Abschnitt enthält. Somit wird die Komplexität des Wellenmusters, welches das Sicherheitsmerkmal definiert, weiter erhöht und somit auch der erreichbare Fälschungsschutz weiter gesteigert.

Ein zweiter Aspekt der Sicherheitslösung betrifft eine Bildwandlungsvorrichtung, insbesondere Datenverarbeitungsvorrichtung, die konfiguriert ist, die Verfahrensschritte des Bildwandlungsverfahrens nachdem ersten Aspekt, insbesondere gemäß einer oder mehrerer seiner hierin beschriebenen Ausführungsformen, auszuführen.

Ein dritter Aspekt der Sicherheitslösung betrifft ein Computerprogramm oder Computerprogrammprodukt, aufweisend Befehle, die bewirken, dass die Bildwandlungsvorrichtung nach dem zweiten Aspekt die Verfahrensschritte des Bildwandlungsverfahrens nachdem ersten Aspekt, insbesondere gemäß einer oder mehrerer seiner hierin beschriebenen Ausführungsformen, ausführt.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen. Die Module können insbesondere dazu konfiguriert sein oder jedenfalls so einsetzbar sein, dass sie im Sinne von verteiltem Rechnen (engl. "Distributed computing" auf verschiedenen Geräten (Computern bzw. Prozessoreinheiten ausgeführt werden, die geografisch voneinander beabstandet und über ein Datennetzwerk miteinander verbunden sind.

Die Bildwandlungsvorrichtung nach dem zweiten Aspekt kann entsprechend einen Programmspeicher aufweisen, in dem das Computerprogramm abgelegt ist. Alternativ kann die Bildwandlungsvorrichtung auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Ein vierter Aspekt der Sicherheitslösung betrifft ein digitales Bild mit einem integrierten Sicherheitsmerkmal als Zielbild oder Abbild desselben auf einem Substrat, erhältlich durch das Bildwandlungsverfahren nach dem ersten Aspekt, insbesondere gemäß einer oder mehrerer seiner hierin beschriebenen Ausführungsformen.

Ein fünfter Aspekt der Sicherheitslösung betrifft ein digitales Bild mit einem integrierten Sicherheitsmerkmal, insbesondere nach dem vierten Aspekt, aufweisend eine Mehrzahl von zueinander parallelen Bildpunktreihen, die jeweils einen transversalwellenförmigen Verlauf aufweisen, wobei jeweils zueinander benachbarte Bildpunktreihen durch einen Zwischenraum voneinander separiert sind, der sich zumindest abschnittsweise farblich von den durch ihn separierten Bildpunktreihen abhebt, wobei das Sicherheitsmerkmal durch den wellenförmigen Verlauf der Bildpunktreihen und der Zwischenräume definiert ist.

Bei einigen Ausführungsformen ist das digitale Bild nach dem vierten oder fünften Aspekt auf einer als Substrat dienenden Dokumentenseite, insbesondere einer Datenseite, für ein Wert- oder Sicherheitsdokument ausgebildet. Insbesondere kann das digitale Bild ein Bild, etwa ein Passfoto, eines Inhabers oder einer Inhaberin des Dokuments sein, insbesondere wenn dieses ein Ausweisdokument darstellt.

Die in Bezug auf den ersten Aspekt der Sicherheitslösung erläuterten Merkmale und Vorteile gelten entsprechend auch für die weiteren vorgenannten Aspekte der Sicherheitslösung.

Des Weiteren wird im Folgenden eine Verifikationsmethodik in verschiedenen weiteren Aspekten der Sicherheitslösung beschrieben, die jeweils verwendet werden können, um ein digitales Bild, insbesondere ein digitales Bild nach dem vierten oder fünften Aspekt der Sicherheitslösung, zu verifizieren. Die Verifikationsmethodik bzw. deren einzelne Aspekte stellt bzw. stellen somit ein bzw. mehrere weitere mögliche Elemente der eingangs erwähnten Sicherheitslösung zum Fälschungsschutz für digitale Bilder dar.

Ein sechster Aspekt der Sicherheitslösung betrifft ein Verifikationsverfahren zur Verifikation eines digitalen Bilds mit integriertem Sicherheitsmerkmal, insbesondere eines digitalen Bilds nach dem vierten oder fünften Aspekt der Sicherheitslösung. Es weist auf:
(i) Transformieren des digitalen Bilds aus einem durch die räumliche Anordnung seiner Bildpunkte definierten Ortsraum in einen Frequenzraum unter Anwendung einer mathematischen Transformation, welche die Eigenschaft hat, Abstände zwischen benachbarten Linien im Ortsraum so in den Frequenzraum abzubilden, dass verschiedene Abstände im Ortsraum zu verschiedenen Frequenzen im Frequenzraum korrespondieren;
(ii) Abgleichen des aus der Transformation resultierenden Spektrums mit zumindest einem Referenzspektrum, das ein mittels der Transformation erzeugtes oder erzeugbares Spektrum eines als echt einzustufenden digitalen Originalbilds repräsentiert; und
(iii) Klassifizieren des zu verifizierenden digitalen Bilds als echt oder unecht in Abhängigkeit von dem Ergebnis des Abgleichs.

Unter dem Begriff "Transformation" und Abwandlungen hiervon, wie hierin verwendet, kann insbesondere eine diskrete oder eine kontinuierliche Transformation, beispielsweise eine diskrete oder kontinuierliche Fourier-Transformation, verstanden werden.

Das Verifikationsverfahren eröffnet somit die Möglichkeit, die Echtheit eines zu verifizierenden digitalen Bilds, statt nur oder zusätzlich zu einer Prüfung im Ortsraum nun im Frequenzraum zu prüfen. Da die Transformation in den Frequenzraum auf periodischen Funktionen, insbesondere sinusförmigen Funktionen, beruht, lassen sich bei der Prüfung im Frequenzraum besonders gut Strukturen des Bilds erkennen, die eine Periodizität aufweisen. Dazu gehören insbesondere digitalen Bilder, wie etwa digitale Bilder gemäß dem vierten oder fünften Aspekt der Sicherheitslösung, die eine Mehrzahl von zueinander periodisch beabstandeten und/oder jeweils selbst einen periodischen Transversalwellenverlauf aufweisenden Bildreihen aus Bildpunkten enthalten. Selbst wenn solche digitalen Bilder im Wesentlichen dasselbe Bild darstellen wie ein reines herkömmliches Rastergrafikbild, so dass eine Unterscheidung beider Bilder im Ortsraum nur schwer oder nur mit besonderen Analysemitteln zuverlässig möglich ist, kann mit Hilfe des Verifikationsverfahrens aufgrund der Prüfung im Frequenzraum und somit einem anderen Prüfkonzept eine solche gewünschte Unterscheidung gut gelingen.

Aufgrund der Wellen-Personalisierungs-Form sind die Abbildungen der Frequenzräume verschiedener Bilder, welche mit derselben Personalisierungsmethode hergestellt wurden, gut vergleichbar. Es muss insbesondere keine Datenbank verwendet werden, sondern es reicht z.B. aus, dass nur das zum Originalbild korrespondierende Spektrum oder Frequenzbild (z.B. Fourier-Transformierte) auf einer zur Ausführung des Verifikationsverfahrens vorgesehenen Verifikationsvorrichtung "offline" gespeichert ist, um die Verifikation durchführen zu können.

Nachfolgend werden zunächst verschiedene beispielhafte Ausführungsformen des Verifikationsverfahrens beschrieben, die jeweils, soweit dies nicht ausdrücklich ausgeschlossen wird oder technisch unmöglich ist, beliebig miteinander sowie mit den im Weiteren beschriebenen anderen Aspekten der Verifikationsmethodik kombiniert werden können.

Bei einigen Ausführungsformen ist die Transformation eine zweidimensionale Transformation, die einen durch die flächige Ausdehnung des zu verifizierenden digitalen Bilds definierten zweidimensionalen Ortsraum in einen zugeordneten zweidimensionalen Frequenzraum transformiert. Somit können insbesondere auch solche innerhalb des Bilds auftretende Periodizitäten gut erkannt und zur Verifikation genutzt werden, die im Bild entlang unterschiedlicher Richtungen auftreten.

Bei einigen Ausführungsformen wird vor der Durchführung der Transformation in dem zu verifizierenden Bild eine Mehrzahl von untereinander verschiedenen Bildsektoren definiert, insbesondere im Sinne einer Unterteilung (wie etwa einer Tessellation) des Bilds in kumulativ das ganze Bild abdeckenden Bildsektoren. Die Transformation wird individuell für mehrere, insbesondere sämtliche, der Bildsektoren ausgeführt, um ein dem jeweiligen Bildsektor zugeordnetes Spektrum im Frequenzraum zu erhalten. Das Abgleichen weist ein Abgleichen auf Bildsektorenbasis auf, bei dem für jeden der Bildsektoren, die jeweils der Transformation unterzogen wurden, das jeweils aus der Transformation resultierende Spektrum mit zumindest einem dem jeweiligen Bildsektor zugeordneten Referenzspektrum (des Originalbilds) abgeglichen wird, das ein mittels der Transformation erzeugtes oder erzeugbares Spektrum des entsprechenden Bildsektors eines als echt einzustufenden digitalen Originalbilds repräsentiert. Das Klassifizieren des zu verifizierenden digitalen Bilds als echt oder unecht erfolgt dann in Abhängigkeit von den Ergebnissen der auf Bildsektorenbasis durchgeführten Abgleiche.

Dieser auf Bildsektoren beruhende Ansatz kann vor allem dann vorteilhaft sein und die Fähigkeiten des Verifikationsverfahrens im Hinblick auf die Erkennung von Fälschungen verbessern, wenn das gefälschte Bild gegenüber dem Originalbild nur oder vor allem kleine Änderungen (Verfälschungen) aufweist, die beim Überführen des kompletten Bildes (z.B. Foto eines Dokumenteninhabers) aus dem Ortsraum in den Frequenzraum nur zu einem Spektrum für das komplette Bild führen, das sich von dem des Originalbilds aufgrund von Frequenzüberlappung nur gering unterscheidet. Die bildsektorweise Erzeugung von Spektren im Frequenzraum erleichtert es dagegen, in von den Fälschungen betroffenen Bildsektoren Abweichung in den entsprechenden Spektren des zu verifizierenden Bilds und des Originalbilds (Referenzspektrum) aufzufinden, da diese typischerweise größer ausfallen als für das komplette Bild.

Bei einigen dieser Ausführungsformen wird das zu verifizierende digitale Bild als unecht klassifiziert, wenn eine Anzahl N der auf Bildsektorenbasis durchgeführten Abgleiche, bei denen eine jenseits einer vorbestimmten Abweichungsschwelle liegende Abweichung zwischen dem Spektrum des jeweiligen Bildsektors und des ihm zugeordneten Referenzspektrums festgestellt wird, größer ist als eine vorbestimmte Verifikationsschwelle M. Insbesondere kann N=1 gewählt werden. Mit diesem Schwellwertansatz lässt sich auf besonders einfache und effiziente Weise der o.g. auf bildsektorweiser Auswertung beruhende Verifikationsansatz realisieren.

Bei einigen Ausführungsformen stellt das zu verifizierende digitale Bild eine Körperregion, insbesondere das Gesicht, einer Person zumindest ausschnittsweise dar und das Verifikationsverfahren weist des Weiteren auf: (i) Durchführen einer Bildanalyse, insbesondere einer Gesichtsmerkmalserkennung, bezüglich des digitalen Bilds zur Erkennung von zumindest einem vorbestimmten biometrischen Merkmal der Person und zur Lokalisierung dieses zumindest einen erkannten biometrischen Merkmals in dem digitalen Bild; und (ii) Auswählen eines das jeweilige biometrische Merkmal darstellenden Bildbereichs des digitalen Bilds als ein Bildsektor der Mehrzahl von untereinander verschiedenen Bildsektoren. Auf diese Weise kann die Festlegung der Bildsektoren dahingehend optimiert werden, dass gezielt dort Bildsektoren definiert werden, wo Fälschungen besonders wahrscheinlich sind, nämlich im Bereich von strukturstarken Bildbereichen, insbesondere solchen, die biometrisch relevante Körperregionen darstellen. So kann die Leistungsfähigkeit des Verifikationsverfahrens noch weiter erhöht werden.

Bei einigen Ausführungsformen erfolgt das Abgleichen eines aus der Transformation erhaltenen Spektrums mit einem zugeordneten Referenzspektrum auf Basis
(a) eines punktweisen Abgleichens einer Mehrzahl von im Frequenzraum zueinander korrespondierenden Spektralwerten beider Spektren, insbesondere von sämtlichen korrespondierenden Spektralwerten beider Spektren, und einem Vergleich der dabei sich möglicherweise ergebenden Abweichungen individuell oder in kumulierter Form mit einer entsprechend definierten Abweichungsschwelle, oder
(b) einer Vergleichsfunktion, die aus dem gemessenen Spektrum und dem Referenzspektrum eine Bewertung berechnet, und einem Vergleich der Bewertung mit einer entsprechend definierten Abweichungsschwelle erfolgt,
um ein Ergebnis des Abgleichens festzulegen, das angibt, ob bei dem Abgleichen eine relevante Abweichung festgestellt wurde. Durch Auswahl der Anzahl der hierbei verwendeten Spektralwerte lässt sich insbesondere ein gewünschtes Verhältnis zwischen Effizienz und Effektivität des Verifikationsverfahrens einstellen.

Bei einigen Ausführungsformen entspricht die Transformation zumindest einem der folgenden Transformationstypen oder sie beruht auf zumindest einem davon: (i) Fourier-Transformation; (ii) Cosinus-Transformation; (iii) Laplace-Transformation; (iv) Wavelet-Transformation; (v) Gabor-Transformation.

Ein siebter Aspekt der Sicherheitslösung betrifft eine Bildverifikationsvorrichtung, insbesondere Datenverarbeitungssystem, die bzw. das konfiguriert ist, die Verfahrensschritte des vorgenannten Verifikationsverfahrens auszuführen.

Ein achter Aspekt der Sicherheitslösung betrifft ein Computerprogramm oder Computerprogrammprodukt, aufweisend Befehle, die bewirken, dass die vorgenannte Bildverifikationsvorrichtung die Verfahrensschritte des vorgenannten Verifikationsverfahrens ausführt.

Die in Bezug auf das Verifikationsverfahren nach dem sechsten Aspekt der Sicherheitslösung erläuterten Merkmale und Vorteile gelten entsprechend auch für die vorgenannten weiteren Aspekte der Sicherheitslösung in Bezug auf die Verifikationsmethodik.

Weitere Vorteile, Merkmale und Anwendungsmöglichkeiten der hier vorgestellten Sicherheitslösung ergeben sich aus der nachfolgenden detaillierten Beschreibung im Zusammenhang mit den Figuren.

Dabei zeigt:
**Fig. 1** schematisch ein System zur Bildwandlung gemäß einer beispielhaften Ausführungsform der Sicherheitslösung mit einer Bildwandlungsvorrichtung nebst Lasergalvanometer zur Laserbeschriftung von Substraten;
**Fig. 2** ein Flussdiagramm zur Veranschaulichung einer beispielhaften Ausführungsform des sicherheitslösungsgemäßen Bildwandlungsverfahrens;
**Fig. 3** eine schematische Darstellung zur Illustration einer beispielhaften Generierung eines rastergrafischen Zwischenbilds aus einem rastergrafischen Quellbild im Rahmen des Verfahrens aus Fig. 2;
**Fig. 4** eine schematische Darstellung zur Illustration einer beispielhaften Erzeugung eines Zielbilds aus einem Zwischenbild im Rahmen des Verfahrens aus Fig. 2;
**Fig. 5** eine schematische Darstellung zur Illustration einer beispielhaften Erzeugung eines Abbilds des Zielbilds auf einem Substrat mittels Laserbeschriftung im Rahmen des Verfahrens aus Fig. 2;
**Fig. 6** eine schematische Darstellung zur Illustration einer im Rahmen des Verfahrens aus Fig. 2 erzeugbaren Wellenstruktur im Zielbild und ggf. dem daraus erzeugten Abbild des Zielbilds auf einem Substrat;
**Fig. 7** eine schematische Darstellung zur Illustration einer Auflösungsanpassung bzw. Bildpunktformänderung im Rahmen des Verfahrens aus Fig. 2;
**Fig. 8** ein Flussdiagramm zur Veranschaulichung einer beispielhaften Ausführungsform eines Verifikationsverfahrens zur Verifikation von digitalen Bildern, insbesondere von mittels des sicherheitslösungsgemäßen Bildwandlungsverfahrens (z.B. gemäß Fig. 2), erzeugbaren digitalen Bildern;
**Fig. 9** eine schematische Darstellung zur Illustration einer Verifikation eines digitalen Bilds auf Basis seines zweidimensionalen (2D) Fourier-Spektrums im Rahmen des Verfahrens aus Fig. 8.

In den Figuren werden regelmäßig dieselben Bezugszeichen für dieselben oder einander entsprechenden Elemente der Sicherheitslösung verwendet.

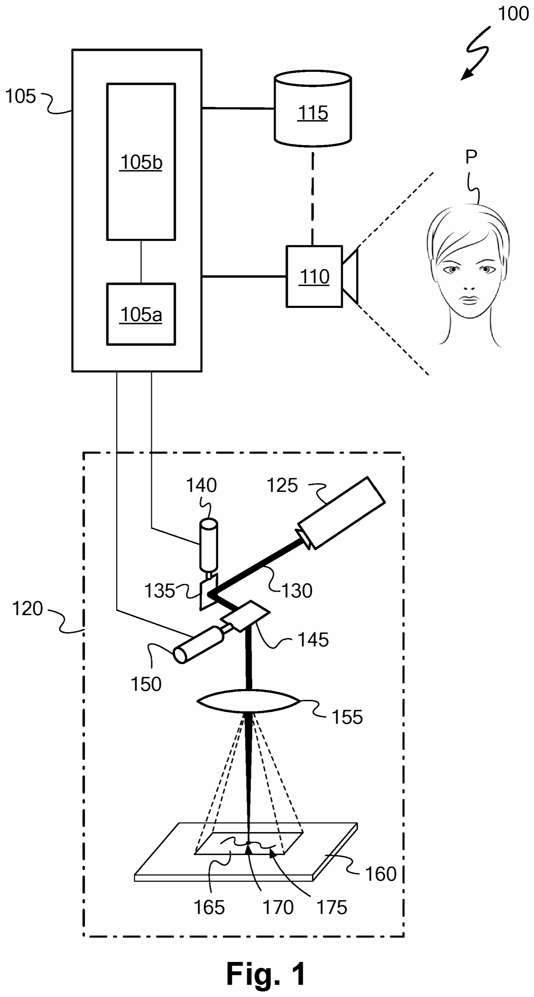

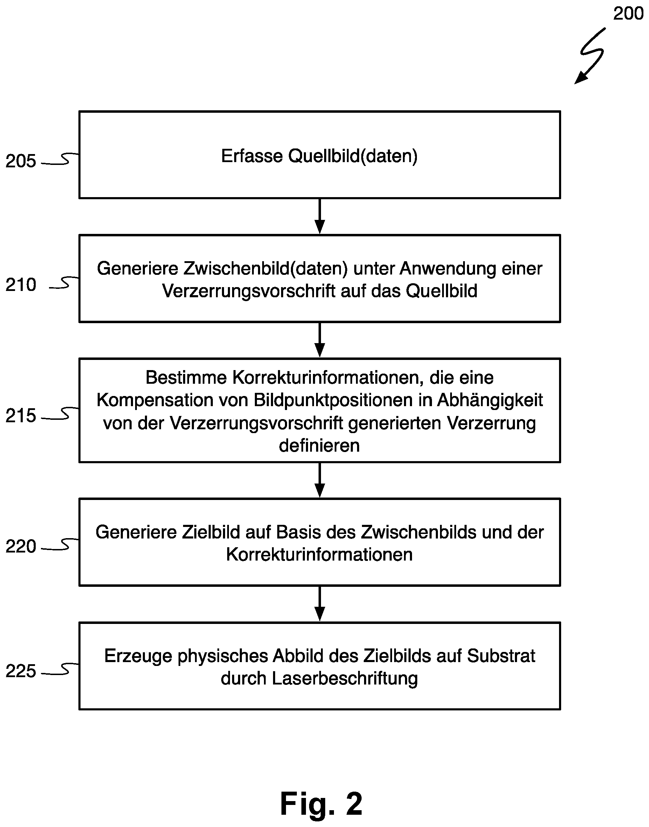

Das in **Fig. 1** illustrierte System 100 zur Bildwandlung gemäß einer beispielhaften Ausführungsform der Sicherheitslösung weist eine Bildwandlungsvorrichtung 105 auf, die insbesondere eine Datenverarbeitungsvorrichtung mit einem Prozessor 105a und einen Speicher 105b aufweisen kann. Der Speicher 105b kann dabei insbesondere als Programmspeicher für ein Computerprogramm dienen, das Anweisungen enthält, die bei ihrer Ausführung auf dem Prozessor 105a die Bilderfassungsvorrichtung 105 veranlassen, ein sicherheitslösungsgemäßes Bildwandlungsverfahren (beispielsweise gemäß Fig. 2) auszuführen. Dementsprechend kann das Bildwandlungsverfahren insbesondere als computer-implementiertes Verfahren ausgebildet sein.

Das System 100 kann des Weiteren einen Bildsensor (Kamera) 110 zur Aufnahme eines digitalen Bilds, insbesondere eines zweidimensionalen digitalen Bilds, eines Objekts, wie beispielsweise einer Person P, aufweisen. Zusätzlich oder alternativ kann ein Datenspeicher 115 vorgesehen sein, der Bilddaten enthält, die ein Bild eines solchen Objekts repräsentieren. Insbesondere ist es möglich, dass die Bilddaten durch den Bildsensor 110 erzeugt und in dem Datenspeicher 115 zwischengespeichert werden, um sie von dort aus der Bilderfassungsvorrichtung 105 zur Verfügung stellen zu können. Das System 100 kann wahlweise auch so ausgelegt sein, dass es bereits den Bildsensor 110 und/oder den Datenspeicher 115 als Komponenten selbst enthält, insbesondere in Baueinheit. Ein dementsprechend der Bildwandlungsvorrichtung 105 als Input zur Verfügung gestelltes Bild wird im Folgenden als "Quellbild" bezeichnet, die es repräsentierenden Daten als "Quellbilddaten".

Wenn die Bilderfassungsvorrichtung 105 ein sicherheitslösungsgemäßes Bildwandlungsverfahren, insbesondere das Bildwandlungsverfahren 200 gemäß Fig. 2, ausführt und dabei als ein Ergebnis ein gewandeltes Bild erzeugt, welches im Weiteren als "Zielbild" und die es repräsentierenden Daten als "Zielbilddaten" bezeichnet werden, besteht zudem die Möglichkeit, dieses Zielbild als physisches Abbild 165 desselben auf ein Substrat 160 zu übertragen. Dies kann insbesondere, wie in Fig. 1 dargestellt, mittels Laserbeschriftung erfolgen. Das Substrat 160 kann insbesondere eine für eine Beschriftung mittels der zur Erzeugung des Abbilds 165 benutzten Beschriftungstechnologie geeignete Seite eines Dokuments sein, im Falle von Laserbeschriftung insbesondere eine Seite, die zumindest ein Polymermaterial aufweist, welches mittels Laserlichts verändert werden kann, um eine Eigenschaftsänderung, insbesondere eine Farbänderung, zu erreichen.

Im System 100 ist speziell ein Lasergalvanometer 120 als Vorrichtung zur Laserbeschriftung von Substraten 160 vorgesehen. Es weist einen Laser 125 auf, der konfiguriert ist, einen Laserstrahl 130 zu emittieren, der an einem ersten Spiegel 135 auftrifft, um dort in Abhängigkeit von einer mittels eines ersten Spiegelantriebs 140 verstellbaren Stellung eines ersten Spiegels 135 auf einen zweiten Spiegel 145 abgelenkt zu werden. Der zweite Spiegel 145 weist wiederum einen Spiegelantrieb 150 auf, um die Stellung des zweiten Spiegels 145 variabel einstellen zu können. Das durch den zweiten Spiegel 145 abgelenkte Laserlicht 130 durchläuft sodann eine Fokussierungsoptik 155, die insbesondere eine F-Theta-Linse sein oder aufweisen kann. Von der Fokussierungsoptik 155 aus trifft der fokussierte Laserstrahl 130 sodann auf das zu beschriftende Substrat 160, um an der Stelle seines Auftreffen auf das Substrat 160 einen Bildpunkt 170 des zu erzeugenden Abbilds 165 des Zielbilds zu erzeugen. Durch entsprechende Ansteuerung der beiden Spiegelantriebe 140 und 150 lässt sich erreichen, dass der Laserstrahl 130 durch die Kombination der Spiegel 135 und 145 variabel abgelenkt wird, sodass über die Zeit sein Auftreffpunkt auf dem Substrat einen linienförmigen Verlauf aufweist. Da das Zielbild, wie im Weiteren noch im Einzelnen erläutert werden wird, wellenzugförmige Bildanteile aufweist, werden diese Wellenzüge entsprechend bei der Laserbeschriftung in wellenförmige Beschriftungslinien in Form von aus Bildpunkten des Abbilds 165 gebildeten Wellenzügen 175 auf das Substrat 160 übertragen.

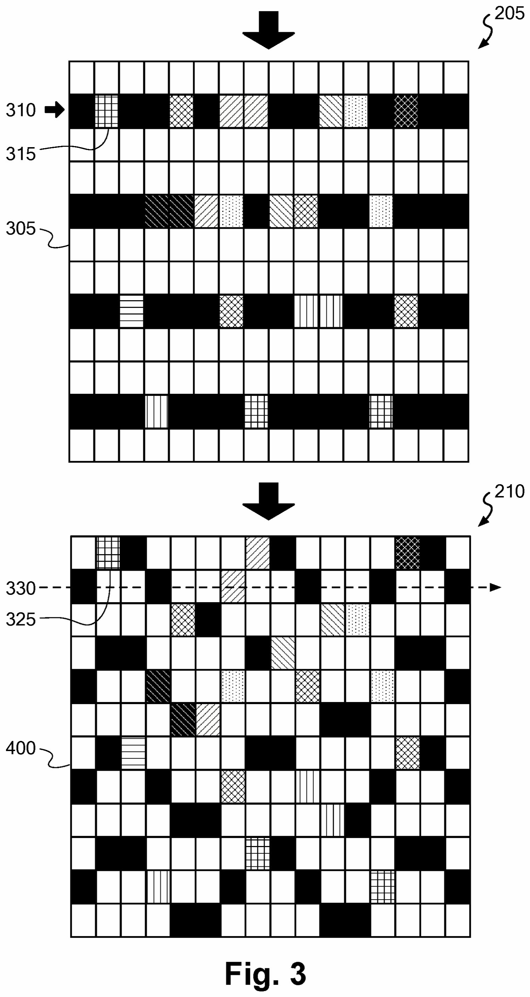

**Fig. 2** illustriert eine beispielhafte Ausführungsform 200 eines Bildwandlungsverfahrens, welches insbesondere mittels des Systems 100 ausführbar ist. In den weiteren Figuren 3 bis 7 werden einzelne Schritte des Bildwandlungsverfahrens 200 in größeren Detail illustriert.

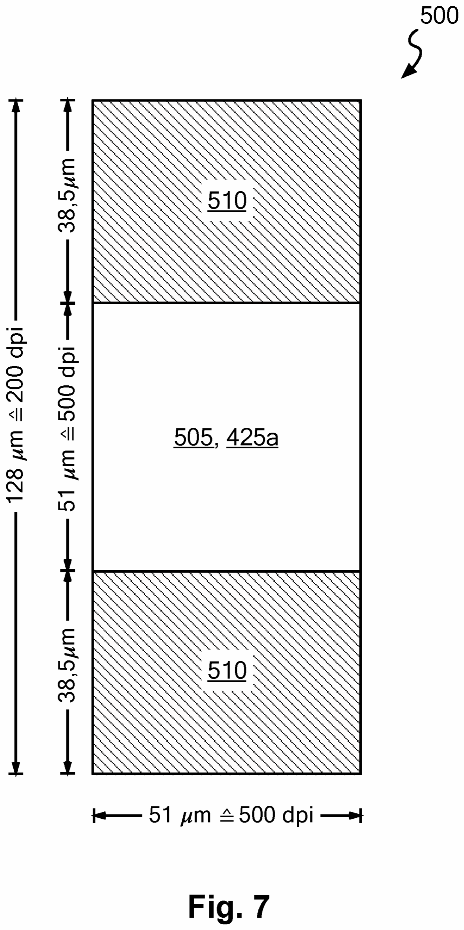

Im Rahmen des Bildwandlungsverfahrens 200 wird zunächst in einem Schritt 205, wie bereits vorausgehend unter Bezugnahme auf Fig. 1 genauer beschrieben, ein Quellbild 305 erfasst und anhand von es repräsentierende Quellbilddaten als Input für die weiteren Schritte des Bildwandlungsverfahrens 200 zur Verfügung gestellt. Im Folgenden wird für die Figuren 3 bis 5 zur Vereinfachung der Darstellungen beispielhaft davon ausgegangen, dass das Quellbild 305 eine digitale Rastergrafik aus matrixförmig angeordneten zweidimensionalen Bildpunkten (Pixeln) ist, die eine Schar von im Quellbild 305 entlang seiner Zeilenrichtung verlaufenden parallelen geraden Linien darstellt. In Fig. 3 sind verschiedene Bildwerte durch verschiedene Schraffuren bzw. schwarze oder weiße Farbgebung kenntlich gemacht. Es wird hier beispielhaft davon ausgegangen, dass es sich bei dem Quellbild 305 und dem Zwischenbild 400 jeweils um ein Grauwert-Bild handelt und jedem Bildpunkt genau ein Grauwert als Bildwert (Pixelwert) zugeordnet ist. Die Auflösung in dem Raster kann sich dabei, wie hier angenommen, für Zeilen und Spalten des Rasters unterscheiden, sodass die Bildpunkte eine rechteckige, nicht-quadratischen Form aufweisen, bei der z.B. die Höhe der Bildpunkte 315 bzw. 325 größer ist als ihre Breite. Dies wird im Weiteren unter Bezugnahme auf Fig. 7 noch genauer erläutert werden.

In einem weiteren Schritt 210, der genauer in **Fig. 3** illustriert ist, wird aus dem Quellbild 305 ein Zwischenbild 400 generiert, welches durch entsprechende Zwischenbilddaten repräsentiert wird. Das Zwischenbild 400 ergibt sich aus dem Quellbild 305 durch Anwenden einer Verzerrungsvorschrift, die eine transversalwellenförmige Verzerrung definiert, und zwar so, dass die jeweiligen Bildwerte von Bildpunkten 315 einer selben Bildpunktreihe 310 (insbesondere Zeile oder Spalte der Rastergrafik) so innerhalb des Rasters verschoben werden, dass die Bildpunkte 325, auf die die Bildwerte der Bildpunktreihe 310 verschoben werden, eine Anordnung innerhalb des Rasters aufweisen, die einer entlang einer zu den Bildpunktreihen 310 parallelen "Ausbreitungsrichtung" 330 verlaufenden Transversalwelle gleicht. Die Form der Transversalwelle kann insbesondere, zumindest abschnittsweise, sinusförmig sein, was vor allem im Hinblick auf das im weiteren beschriebene Verifikationsverfahren vorteilhaft sein kann welches auf einer Fourier-Analyse beruht.

Im Bildwandlungsverfahren 200 folgt ein weiterer Schritt 215, der von dem im Schritt 210 generierten Zwischenbild 400 ausgeht. Dabei werden in Abhängigkeit von der im Schnitt 210 zur Verzerrung des Quellbilds 305 genutzten Verzerrungsvorschrift Korrekturinformationen bestimmt, die ausgehend von dem Raster des Zwischenbilds 400 eine Verschiebung von Bildpunktpositionen des Rasters definieren und die dazu führen, dass das Zielbild 455 einem Betrachter desselben als zumindest weitgehend unverzerrt erscheint bzw. erscheinen würde. Das matrixförmige Raster wird somit verändert, und zwar so, dass geradlinige Bildpunktreihen 310 des Rasters jeweils in transversalwellenförmige Wellenzüge aus entsprechend in einem transversalwellenförmigen Verlauf aufeinanderfolgenden Bildpunkten so umgewandelt werden, dass dadurch die im Schritt 210 erzeugte Verzerrung zumindest weitgehend kompensiert wird.

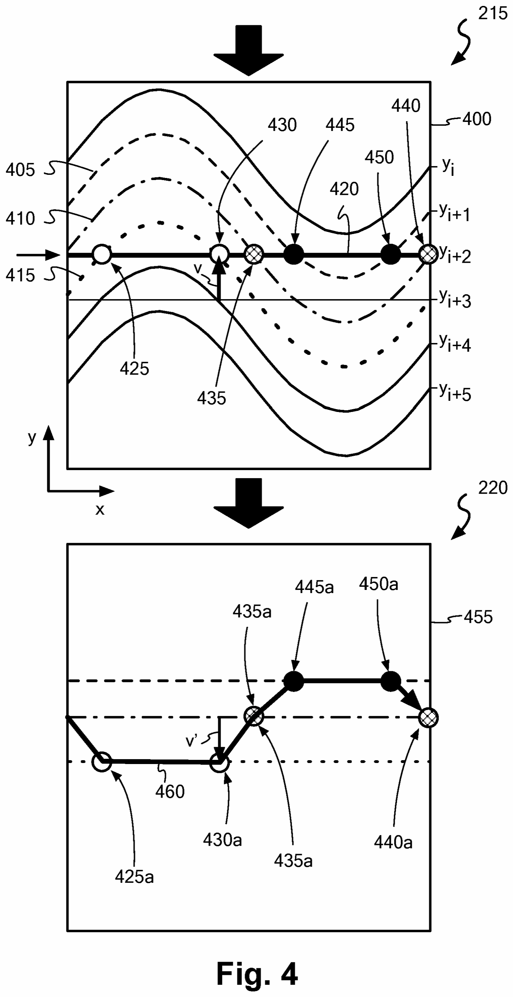

Der Schritt 215 ist beispielhaft und vereinfacht in **Fig. 4** illustriert. Dazu ist im oberen Bereich von Fig. 4 nochmals in vereinfachter Darstellung das Zwischenbild 400 mit einigen beispielhaften, sich jeweils aus der Verzerrung im Schritt 210 ergebenden transversalwellenförmigen Anordnungen von Bildpunkten, insbesondere den Anordnungen 405, 410, 415, gezeigt. Jede dieser transversalwellenförmigen Anordnungen ist im Schritt 210 aus einer geradlinigen Bildpunktreihe, insbesondere Zeile, 310 des Quellbilds 305 hervorgegangen. Um nun von dem Zwischenbild 400 zum Zielbild 455 zu gelangen erfolgt eine Abtastung (Scannen) des Zwischenbilds 400 entlang von geradlinigen Scanpfaden 420, von denen zur Vereinfachung der Darstellung nur einer beispielhaft in Fig. 4 illustriert ist. Dabei werden entlang einer Scanrichtung des Scanpfads 420 die auf ihm liegenden Positionen von Bildpunkten 425 bis 450 erfasst, die jeweils zu einer der transversalwellenförmigen Anordnungen von Bildpunkten, wie hier beispielhaft den Anordnungen 405, 410 und 415, gehören. Zum Bildpunkt 430 ist beispielhaft ein Verschiebungsvektor v eingezeichnet, welcher der im Rahmen der Verzerrung im Schritt 210 erfolgten Verschiebung des Bildpunktwerts eines (Ausgangs- )Bildpunkts im Quellbild 305 auf den korrespondierenden "anderen" Bildpunkt 430 im Zwischenbild 400 entspricht. Für die weiteren hier im einzelnen identifizierten Bildpunkte 425 und 435 bis 450 gilt dies entsprechend.

Im Rahmen des Schritts 220, wird diese Verzerrung kompensiert, wobei ein zu v inverser Verschiebungsvektor v' genutzt wird. Anders als bei der Verzerrung, werden jedoch bei der Kompensation nicht Bildwerte von einem Bildpunkt auf einen anderen übertragen, sondern stattdessen die Positionen der Bildpunkte selbst verschoben, die dabei ihre jeweiligen Bildpunktwerte behalten. Beispielhaft auf den Bildpunkt 430 des Zwischenbilds 400 bezogen bedeutet dies, dass dessen Position um den Verschiebungsvektor v' verschoben wird, wie im unteren Teil der Fig. 4 dargestellt. Wenn dies entsprechend auch für die weiteren auf dem Scanpfad 420 liegenden Bildpunkte 425 und 435 bis 450 erfolgt, wobei jeweils deren individueller Verschiebungsvektor v' bestimmt und zur Kompensation genutzt wird, dann ergibt sich ein aus den entsprechend verschobenen Bildpunkten 425a bzw. 435a bis 450a gebildeter transversalwellenförmiger Wellenzug 460 im Zielbild 455.

Insgesamt wird dieser Verschiebungsprozess im Schritt 220 für alle definierten (parallelen)Scanpfade 420 durchgeführt, so dass sich im Zielbild 455 eine Schar von transversalwellenförmiger Wellenzügen 460 ergibt.

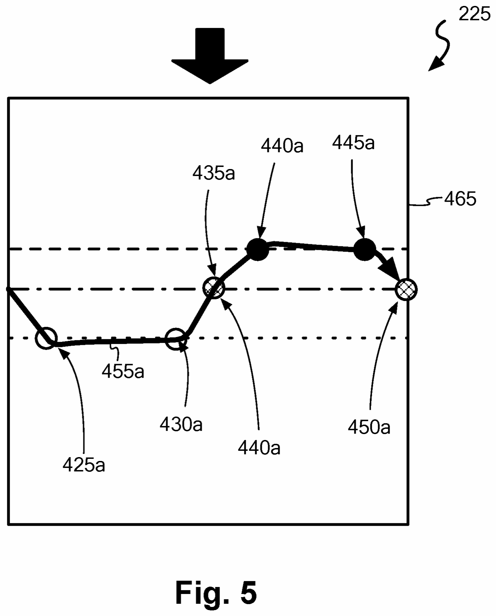

In einem weiteren Schritt 225, der in **Fig. 5** genauer illustriert ist, kann nun auf Basis des Zielbilds 455 ein physisches Abbild 465 desselben auf dem Substrat 160 mittels Laserbeschriftung erzeugt werden, wozu der Auftreffpunkt 170 des Laserstrahls durch entsprechende Ansteuerung der Laserbeschriftungsvorrichtung, insbesondere des Lasergalvanometers 120 des Systems 100, entlang eines jeweiligen Laserpfads 455a so geführt wird, dass die Wellenzüge 460 des Zielbilds 455 auf das Substrat 160 mittels Ausbildung entsprechender Bildpunkte des Abbilds entlang des Laserpfads 455a abgebildet werden.

Wie in Fig. 5 illustriert, ist jedoch in der Praxis die Überführung des Zielbild 455 in das Abbild 465 in der Regel nicht perfekt. Dies kann insbesondere daran liegen, dass die Spiegel 135 und 145 eine von Null verschiedene Massenträgheit aufweisen und bei hohen Laserbeschriftungsgeschwindigkeiten nicht mehr in der Lage sind, abrupte Richtungswechsel entlang der Verläufe der Wellenzüge 460 exakt auf das Substrat 160 abzubilden. Daher können sich an den Stellen starker Richtungswechsel regelmäßig Abweichungen zwischen der exakten Form des jeweiligen Wellenzugs 460 und dem zugehörigen sich daraus ableitenden Laserpfad 455a ergeben. Insbesondere werden so "eckige" Verlaufsabschnitte eines Wellenzugs 460 in der Regel im Abbild 465 eine abgerundete Form aufweisen, insbesondere im Sinne eines "Überschwingens". In Fig. 5 ist dies beispielhaft gezeigt, wobei als Referenz die Bildpunkte 425a bis 450a des Zielbilds 455 eingeblendet sind, um die Abweichungen gut erkennbar zu machen. Diese nicht perfekte Abbildung vom Zielbild 455 in das Abbild 465 ist jedoch sogar vorteilhaft, denn sie stellt einen weiteren Aspekt des durch die Wellenzüge des Abbilds 465 definierten Sicherheitsmerkmals dar, der eine Fälschung weiter erschwert.

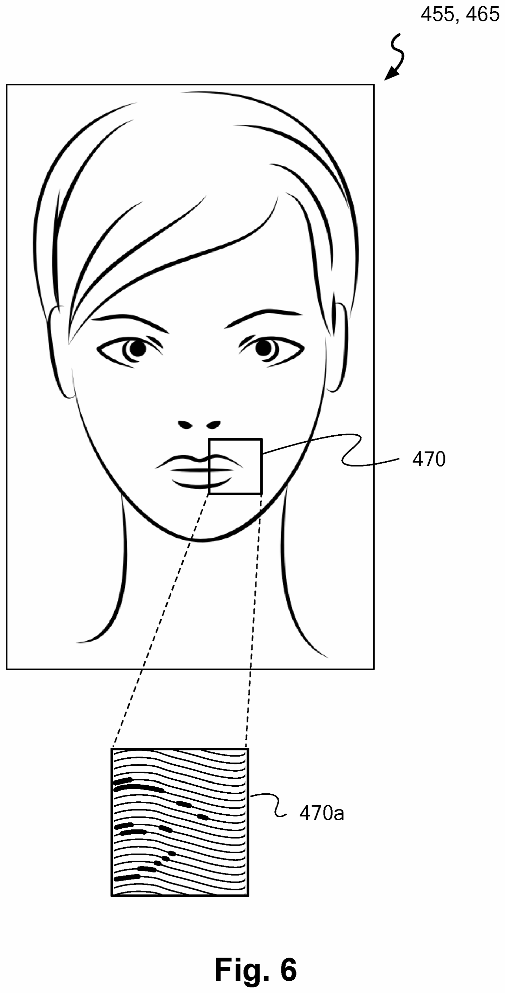

**Fig. 6** illustriert anhand einer vergrößerten Darstellung 470a eines beispielhaften Bildausschnitts 470 eine im Rahmen des Verfahrens 200 erzeugbare Wellenstruktur im Zielbild 455 oder dem daraus erzeugten Abbild 465 auf einem Substrat 160 (ohne Darstellung der genannten Abweichungen zwischen Zielbild 455 und Abbild 465). Die hier im Bildausschnitt 470 enthaltene markante Mundpartie wird im Zielbild 455 bzw. gleichermaßen im Abbild 465 durch entsprechende sich gegen benachbarte Bildbereiche abhebende Grauwerte der Bildpunkte (hier die dicken Linienbereiche der Wellenzugabschnitte bildenden) auf den Wellenzügen dargestellt. Die benachbarten Wellenzüge sind dabei durch einen Zwischenraum anderer Farbgebung (z.B. weiß oder in der Hintergrundfarbe des Substrats 160) voneinander separiert, sodass sie jedenfalls bei entsprechender Vergrößerung individuell optisch erkennbar und detektierbar sind.

**Fig. 7** illustriert eine Auflösungsanpassung bzw. Bildpunktformänderung im Rahmen des Verfahrens 200. wie vorausgehend unter Bezugnahme auf Fig. 3 im Einzelnen beschrieben, wurde hier beispielhaft ein Bildraster des Quellbilds 305 und des Zwischenbilds 400 verwendet, bei dem die Zeilen und Spalten eine unterschiedliche Auflösung und somit unterschiedliche Kantenlängen der Bildpunkte in den beiden orthogonalen Richtungen (x bzw. y) aufweisen. Um nun die vorgenannten Zwischenräume zwischen benachbarten Wellenzügen im Zielbild 455 und gegebenenfalls dem nachfolgend erzeugten Abbild 465 realisieren zu können, ohne dadurch eine unerwünschte Verzerrung (nicht zu verwechseln mit der gewünschten temporären Verzerrung im Schritt 210 gemäß der Verzerrungsvorschrift) des jeweiligen Bilds in Kauf nehmen zu müssen, werden beim Übergang in das Zielbild 455 die Bildpunkte so beschnitten, dass sie eine bzgl. Breite und Höhe symmetrische, insbesondere quadratische, Form aufweisen, sodass der bzw. die weggeschnittenen Anteile zur Ausbildung der Zwischenräume zur Verfügung stehen.

Dies ist Fig. 7 gezeigt, wo ein Bildpunkt 500 des Zwischenbilds 400 auf einen quadratischen und in das Zielbild zu übertragenden Anteil 505 sowie zwei verbleibende und nicht in des Zielbilds übertragende Anteile 510 zerlegt wird. Anstelle letzterer wird im Zielbild 455 ein (halber) Zwischenraum zum jeweils benachbarten Bildpunkt ausgebildet.

Zusätzlich sind in Fig. 7 beispielhafte Dimensionierung und Auflösungen (in dpi) angegeben, wobei sich letztere speziell auf das Quellbild 305 bzw. gleichermaßen auf das Zwischenbild 400 beziehen.

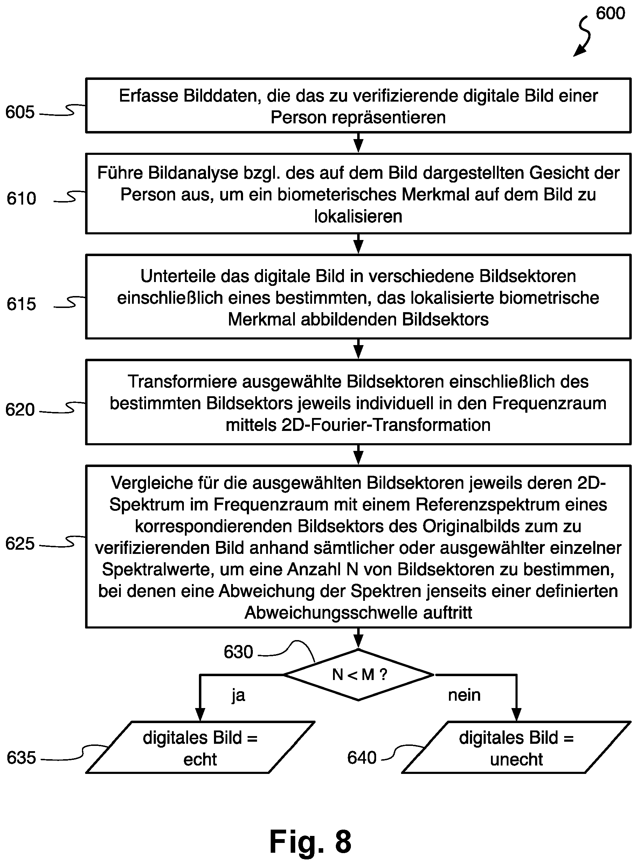

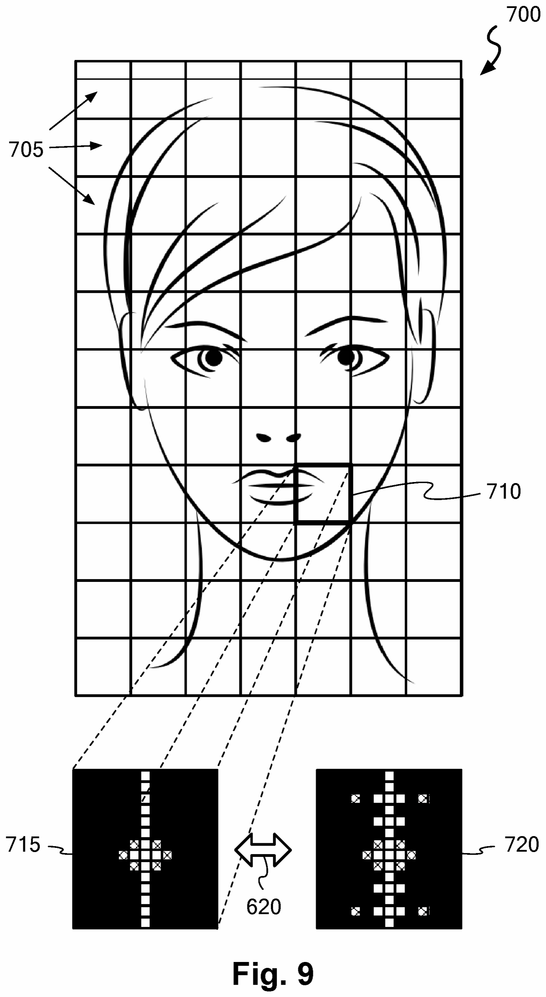

**Fig. 8** illustriert mithilfe eines Flussdiagramms eine beispielhaften Ausführungsform 600 eines, insbesondere computer-implementierten, Verifikationsverfahrens zur Verifikation von digitalen Bildern, insbesondere von mittels des sicherheitslösungsgemäßen Bildwandlungsverfahrens (z.B. gemäß Fig. 2), erzeugbaren digitalen Bildern. **Fig. 9** zeigt eine schematische Darstellung zur Illustration einer Verifikation eines digitalen Bilds auf Basis seines zweidimensionalen (2D) Fourier-Spektrums im Rahmen des Verfahrens 600 aus Fig. 8.

Bei dem Verifikationsverfahren 600 werden in einem Schritt 605 Bilddaten erfasst, die ein zu verifizierendes digitales Bild 700 repräsentieren. Im Folgenden wird beispielhaft davon ausgegangen, dass dieses digitale Bild 700 eine Person P repräsentiert (vgl. Fig. 9). Ähnlich wie bei dem System 100 aus Fig. 1, kann das Erfassen des Bildes 700 insbesondere mittels einer Kamera, durch Empfangen von Bilddaten über eine Kommunikationsverbindung oder mittels Auslesen aus einem Speicher erfolgen. Das Bild 700 kann insbesondere als physisches Bild auf eine Objektoberfläche insbesondere auf einem blattförmigen Substrat 160, insbesondere auf einer Dokumentenseite eines Dokuments (wie etwa eines Passdokuments), ausgebildet sein.

In einem weiteren (optionalen) Schritt 610 des Verifikationsverfahrens 600 erfolgt eine Bildanalyse, bei der das digitale Bild 700, insbesondere auf besonders relevante Bildbestandteile hin, analysiert, wird. Dies kann insbesondere eine Bildsegmentierung umfassen. Im Falle einer durch das Bild 700 zumindest abschnittsweise dargestellten Person P kann die Bildanalyse insbesondere eine Gesichtsanalyse umfassen, bei der biometrische Merkmale des Gesichts, wie etwa die Lage der Augen, insbesondere der Pupillen, der Nase, von Ohren, Mundwinkeln usw. lokalisiert werden. Dies kann insbesondere den Zweck haben, in einem weiteren Schritt 615 des Verfahrens 600, bei dem das digitale Bild in verschiedene Bildsektoren 705 unterteilt wird, die Bildsektoren 705 in Abhängigkeit von den lokalisierten biometrischen Merkmalen zu definieren, beispielsweise so, dass je biometrischem Merkmal zumindest ein Bildsektor 705 definiert wird. **In** Fig. 9 stellt beispielsweise der Bildsektor 710 einen solchen ausgewählten Bildsektor aus der Menge der Bildsektoren 705 dar.

Die in Fig. 9 illustrierte Unterteilung des Bilds in mehrere Bildsektoren 705 dient insbesondere dazu, in einem weiteren Schritt 620 auf Basis einzelner Bildsektoren (z.B. Bildsektor 710) eine Transformation vom Ortsraum in den Frequenzraum mittels einer zweidimensionalen Transformation, hier beispielhaft speziell einer zweidimensionalen Fourier-Transformation, durchführen zu können. Die dabei berücksichtigten Bildsektoren können insbesondere sämtliche definierte Bildsektoren 705 sein oder nur eine bestimmte Auswahl davon. Diese Auswahl kann insbesondere dadurch bestimmt sein, dass nur zu den biometrischen Merkmalen definierte Bildsektoren 710, insbesondere sämtliche davon, zu dieser Auswahl gehören.

Beispielhaft ist in Fig. 9 ein aus Schritt 620 resultierendes, matrixförmiges (diskretes) 2D-Fourier-Spektrum 715 des ausgewählten Bildsektors 710 dargestellt, bei dem jeder Punkt der Matrix über seinen Punktwert (in Fig. 9 durch verschiedene Farben bzw. Schraffuren gekennzeichnet) den Wert eines bestimmten Fourier-Koeffizienten bzw. Spektralwerts des Spektrums 715 darstellt. Das Zentrum des Spektrums entspricht der Frequenz null und die Position des jeweiligen Punkts in der Matrix identifiziert den jeweiligen Wellenvektor bzw. Fourier-Koeffizienten dazu, so dass der Abstand eines jeweiligen Punkts vom Zentrum zu der durch den Punkt repräsentierten Frequenz (bzw. Wellenlänge) korrespondiert. Der durch das Zentrum und den Punkt repräsentierte Richtungsvektor kennzeichnet die durch den Punkt repräsentierte Ausbreitungsrichtung im zweidimensionalen Ortsraum.

Es wird im vorliegenden Beispiel angenommen, dass der Bildsektor 710 - ähnlich wie der Bildausschnitt 470a aus Figur 6 - eine Mehrzahl von Wellenzügen aufweist. Die helle Linie im Spektrum, die anzeigt, dass die zu den Punkten der Linie korrespondierenden Fourier-Koeffizienten im Spektrum 715 stark besetzt sind, wird im Wesentlichen durch die aufgrund der im Bildsektor 710 vielfach vorhandenen Wellenzüge sehr häufigen, näherungsweise horizontalen Bereiche der Minima und Maxima der Wellenzüge (im Ortsraum) hervorgerufen.

Im Rahmen eines weiteren Schritts 625 des Verfahrens 600 erfolgen nun mehrere Vergleiche, bei denen jeweils ein aus einem ausgewählten Bildsektor im Schritt 620 gewonnenes Spektrum 715 mit einem Referenzspektrum 720 verglichen wird, das sich bei Anwendung derselben Transformation aus dem echten Originalbild für den betreffenden Bildsektor ergibt. Die Referenzspektren 720 können insbesondere auf gegen unautorisierten Zugriff gesicherte Weise vorab in einem Speicher abgelegt sein, um zum Zwecke des Vergleichs daraus gelesen und zur Verfügung gestellt zu werden. Es ist beispielsweise möglich, dies so auszugestalten, dass die Referenzspektren 720 über eine gesicherte Kommunikationsverbindung von einem entfernten Server abgerufen werden können.

Im Beispiel der Fig. 9 zeigt ein Vergleich des aus den zu verifizierenden Bild 700 abgeleiteten Spektrums 715 mit dem korrespondierenden, aus dem echten Originalbild abgeleiteten Referenzspektrum 720 eine signifikante Abweichung. Ein entsprechender Vergleich wird nun für alle ausgewählten Bildsektoren individuell durchgeführt. Um nun abschließend festzustellen, ob es sich bei dem Bild 700 um das Originalbild oder eine Fälschung handelt, kann insbesondere ein Prüfkriterium verwendet werden, dass auf einer Anzahl N der ausgewählten Bildsektoren des Bilds 700 beruht, bei denen im Rahmen ihres jeweiligen zugeordneten Spektrum-Vergleichs eine jenseits einer definierten Abweichungsschwelle liegende Abweichung festgestellt wurde. Diese Anzahl N kann nun mit einer vorbestimmten Schwelle M verglichen werden, mit der eine Empfindlichkeit des Prüfverfahrens eingestellt werden kann. Ergibt sich dabei, dass N kleiner ist als M (630 - ja), dann wird das digitale Bild 700 als echt klassifiziert und dieses Ergebnis in einem Schritt 635 ausgegeben. Andernfalls, (630 - nein) wird das Bild 700 als unecht klassifiziert und dieses Ergebnis in einem Schritt 640 ausgegeben. Insbesondere kann M = 1 gewählt werden, sodass dann bereits eine Abweichung beim Spektrum 715 eines einzigen Bildsektors genügt, um das Bild 700 als unecht bzw. gefälscht zu klassifizieren.

Der Vergleich der beiden Spektren 715 und 720 für den jeweiligen Bildsektor kann dabei insbesondere auf Fourier-Koeffizienten-Basis erfolgen, d. h. so, dass jeweils die paarweise zueinander korrespondieren Fourier-Koeffizienten der beiden Spektren 715 und 720 miteinander verglichen werden, wobei geprüft wird, ob ihre Werte weiter als eine erlaubte Schwelle auseinanderliegen. Die Gesamtzahl der jenseits der Schwelle liegenden Werte kann so dann mit einer Akzeptanzschwelle verglichen werden, um festzustellen, ob im jeweiligen Bildsektor eine (signifikante) Abweichung zwischen beiden Spektren vorliegt.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### BEZUGSZEICHENLISTE

- P: Objekt, insbesondere Person
- v: Verschiebungsvektor für Verzerrung
- v': zu v inverser Verschiebungsvektor für Kompensation
- 100: System zur Bildwandlung, beispielhafte Ausführungsform
- 105: Bildwandlungsvorrichtung, insbesondere Datenverarbeitungsvorrichtung
- 105a: Prozessor
- 105b: (Programm-)Speicher
- 110: Bildsensor, Kamera
- 115: Bildspeicher
- 120: Lasergalvanometer
- 125: Laser
- 130: Laserstrahl
- 135: erster Spiegel
- 140: Spiegelantrieb für ersten Spiegel
- 145: zweiter Spiegel
- 150: Spiegelantrieb für zweiten Spiegel
- 155: Optik, insbesondere F-Theta-Linse
- 160: Substrat
- 165: Abbild des Zielbilds auf dem Substrat
- 170: Auftreffpunkt des Laserstrahls, Bildpunkt des Abbilds
- 175: Wellenzug aus Bildpunkten des Abbilds
- 200: Bildwandlungsverfahren, beispielhafte Ausführungsform
- 205-225: Verfahrensschritte des Verfahrens 200
- 305: digitales (Quell-)Bild in Rastergrafik
- 310: Bildpunktreihe des Quellbilds 305
- 315: Bildpunkt des Quellbilds 305/der Bildpunktreihe 310
- 325: "anderer" Bildpunkt, auf den ein Bildwert des Bildpunkts 315 durch die Verzerrungsvorschrift abgebildet wird
- 330: "Ausbreitungsrichtung" der sich durch Verzerrung aus der Bildpunktreihe 310 ergebenden Transversalwelle
- 400: Zwischenbild
- 405-415: transversalwellenförmige Anordnung der "anderen" Bildpunkte
- 420: Scanpfad
- 425, 430: beim Scannen erfasste Bildpunkte auf Transversalwelle 415
- 425a, 430a: positionskompensierte Bildpunkte aus Transversalwelle 415
- 435, 440: beim Scannen erfasste Bildpunkte auf Transversalwelle 410
- 435a, 440a: positionskompensierte Bildpunkte aus Transversalwelle 410
- 445, 450: beim Scannen erfasste Bildpunkte auf Transversalwelle 405
- 445a, 450a: positionskompensierte Bildpunkte aus Transversalwelle 405
- 455: Zielbild, mit kompensierten Bildpunktpositionen
- 455a: Laserpfad
- 460: Wellenzug im Zielbild
- 465, 165: Abbild des Zielbilds auf Substrat, mittels Laserbeschriftung erzeugt
- 470: Bildausschnitt
- 470a: vergrößerter Bildausschnitt 470
- 500: Bildpunkt des Zwischenbilds 400
- 505: ins Zielbild übertragener Anteil des Bildpunkts 500
- 510: nicht ins Zielbild übertragene Anteile des Bildpunkts 500
- 600: Verifikationsverfahren, beispielhafte Ausführungsform
- 605-640: Verfahrensschritte des Verifikationsverfahrens 600
- 700: zu verifizierendes digitales Bild
- 705: Bildsektoren im zu verifizierenden Bild 700
- 710: ausgewählter Bildsektor
- 715: 2D-Fourier-Spektrum von Bildsektor 710
- 720: 2D-Fourier-Referenzspektrum des zum Bildsektor 710 korrespondierenden Bildsektors im Originalbild (hier Quellbild 305)

## Patentansprüche

1. Bildwandlungsverfahren (200) zur Integration eines Sicherheitsmerkmals in ein digitales Quellbild (305) zur Erzeugung eines durch das integrierte Sicherheitsmerkmal gesicherten Zielbilds (455), wobei das Bildwandlungsverfahren (200) aufweist:
Erfassen (205) von Quellbilddaten, die ein mittels des Sicherheitsmerkmals zu schützendes digitales Quellbild (305) repräsentieren, das in einem Raster aus geraden zueinander parallelen Bildpunktreihen (310) angeordnete Bildpunkte (315) mit jeweils zumindest einem Bildpunktwert je Bildpunkt (315) aufweist;
Generieren (210) von Zwischenbilddaten, die ein Zwischenbild (400) repräsentieren, das sich aus dem Quellbild (305) durch Anwenden einer Verzerrungsvorschrift ergibt, gemäß der je Bildpunktreihe (310) des Quellbilds (305) die jeweiligen Bildpunktwerte von Bildpunkten (315) der Bildpunktreihe (310) innerhalb des Rasters entlang einer zu der Bildpunktreihe (310) gewinkelt, insbesondere orthogonal, verlaufenden Richtung auf einen dem jeweiligen Bildpunkt (315) durch die Verzerrungsvorschrift bestimmten oder bestimmbaren jeweils anderen Bildpunkt (325; 500) des Rasters so übertragen werden, dass die Anordnung (405; 410; 415) dieser anderen Bildpunkte (325; 500) im Raster eine Transversalwellenform aufweist;
Erzeugen (220) von Zielbilddaten, die das Zielbild (455) repräsentieren, wobei:
das Zwischenbild (400) bildpunktreihenmäßig abgetastet wird, um je Bildpunktreihe des Zwischenbilds (400) eine Folge von gemäß der Abtastung aufeinanderfolgenden Bildpunkten (425, 430, 435, 440, 445, 450) zu definieren, deren Bildpunktwerte sich aus der Übertragung von entsprechenden Bildpunktwerten aus dem Quellbild (305) gemäß der Verzerrungsvorschrift ergeben haben;
jeder Bildpunkt (425, 430, 435, 440, 445, 450) der Folge in einen dazu jeweils korrespondierenden Bildpunkt (425a, 430a, 435a, 440a, 445a, 450a) des Zielbilds (455) transformiert wird, indem ausgehend von seiner Position in dem Zwischenbild (400) durch Kompensation der durch Anwenden der Verzerrungsvorschrift bei der Generierung des Zwischenbilds (400) erlittenen Verzerrung seine Position in dem Zielbild (455) festgelegt wird, sodass die Anordnung (405; 410; 415) der jeweiligen Bildpunkte jeder Folge in dem Zielbild (455) einen transversalwellenförmigen Wellenzug darstellt; und
das integrierte Sicherheitsmerkmal durch die Wellenzüge definiert ist, wobei die Anordnung (405; 410; 415) der jeweiligen Bildpunkte jeder Folge in dem Zielbild (455) so festgelegt wird, dass je zwei benachbarten Wellenzüge voneinander durch einen Zwischenraum separiert sind, und
wobei das Substrat (160) so gewählt oder bearbeitet wird, dass es eine Farbe aufweist, die sich vom Mittelwert der gemäß der Bildpunktwerte bestimmen Farben der Bildpunkte, die die Wellenzüge des Zielbilds (455) bilden, so abhebt, dass benachbarte Wellenzüge optisch unterscheidbar sind.

2. Bildwandlungsverfahren (200) nach Anspruch 1, des Weiteren aufweisend: Erzeugen (225) eines physischen Abbilds (165; 465) des Zielbilds (455) auf einer Oberfläche eines Substrats (160), wobei das Abbild (165; 465) des Zielbilds (455) durch serielles Generieren von Bildpunkten auf dem Substrat (160) erzeugt wird, indem, um dabei eine Serie von Bildpunkten auf dem Substrat (160) zu generieren, die zu einer jeweiligen Folge von Bildpunkten des Zielbilds (455) korrespondiert, diese Bildpunkte der Serie auf dem Substrat (160) entsprechend der durch die Folge definierten Bildpunktreihenfolge der korrespondierenden Bildpunkte des Zielbilds (455) erzeugt werden.

3. Bildwandlungsverfahren (200) nach Anspruch 2, wobei das Erzeugen des physischen Abbilds (165; 465) des Zielbilds (455) auf dem Substrat (160) mittels Laserbeschriftung erfolgt, bei der sequenziell mithilfe eines Laserstrahls (130) die Bildpunkte des Abbilds (165; 465) auf dem Substrat (160) generiert werden.

4. Bildwandlungsverfahren (200) nach Anspruch 3, wobei die verschiedenen Positionen der Serie, an denen der Laserstrahl (130) zur Generierung der Bildpunkte des Abbilds (165; 465) auf dem Substrat (160) auftrifft, mittels variabler Ablenkung des Laserstrahls (130) in einem spiegelbasierten Lasergalvanometer (120) angesteuert werden.

5. Bildwandlungsverfahren (200) nach Anspruch 4, wobei zumindest ein Spiegel (135; 145) des Lasergalvanometers (120) zur Ansteuerung einer jeweiligen Position eines zu erzeugenden Bildpunkts des Abbilds (165; 465) auf dem Substrat (160) mithilfe eines Steuersignals angesteuert wird, das in Abhängigkeit von der Kompensation definiert ist, die zu demjenigen Bildpunkt des Zwischenbilds (400) bestimmt wurde, der zu dem zu erzeugenden Bildpunkt des Abbilds (165; 465) korrespondiert.

6. Bildwandlungsverfahren (200) nach Anspruch 4 oder 5, wobei ein Lasergalvanometer (120) zur variablen Ablenkung des Laserstrahls (130) verwendet wird, bei dem die Massenträgheit zumindest eines seiner zum Ablenken verwendeten Spiegel (135; 145) so groß ist, dass beim Abbilden der Wellenzüge des Zielbilds (455) durch Generieren der Bildpunkte des Abbilds (165; 465) auf dem Substrat (160) bei abrupten Richtungswechseln entlang des Verlaufs der Wellenzüge Abweichungen des Abbilds (165; 465) von dem Zielbild (455) entstehen.

7. Bildwandlungsverfahren (200) nach einem der vorausgehenden Ansprüche, wobei die Anordnung (405; 410; 415) der jeweiligen Bildpunkte jeder Folge in dem Zielbild (455) so festgelegt wird, dass sie einen transversalwellenförmigen Wellenzug (460) darstellt, der zumindest abschnittsweise periodisch ist,
wobei die Anordnung (405; 410; 415) der jeweiligen Bildpunkte jeder Folge in dem Zielbild (455) vorzugsweise so festgelegt wird, dass sie einen transversalwellenförmigen Wellenzug (460) darstellt, der zumindest abschnittsweise sinusförmig ist.

8. Bildwandlungsverfahren (200) nach einem der vorausgehenden Ansprüche, wobei jeder der zu einer jeweiligen Folge resultierenden Wellenzüge zumindest zwei Wendepunkte aufweist.

9. Bildwandlungsverfahren (200) nach einem der vorausgehenden Ansprüche, wobei das Raster der Bildpunkte des Quellbilds (305) Zeilen und Spalten aufweist, und sich die Auflösung der Zeilen von der Auflösung der Spalten unterscheidet.

10. Bildwandlungsverfahren (200) nach Anspruch 9, wobei die Auflösung des Quellbilds (305) in der orthogonal zu den Bildpunktreihen verlaufenden Richtung höchstens 70% der Auflösung in der entlang der Bildpunktreihen verlaufenden Richtung beträgt.

11. Bildwandlungsverfahren (200) nach Anspruch 9 oder 10, wobei die Auflösung des Quellbilds (305) in der orthogonal zu den Bildpunktreihen verlaufenden Richtung mindestens 200 Bildpunkte je Inch bzw. je 2,54cm, PPI, beträgt.

12. Bildwandlungsverfahren (200) nach einem der vorausgehenden Ansprüche, wobei die Bildpunkte des Zielbilds (455) so festgelegt werden, dass ihre jeweilige Ausdehnung entlang und orthogonal zur Transversalrichtung der Wellenzüge gleich ist,
und/oder
wobei die Verzerrungsvorschrift so definiert ist oder wird, dass bei ihrem Anwenden auf Bildpunktreihen des Quellbilds (305) zumindest für eine Untermenge der Bildpunktreihen der daraus jeweils resultierende Wellenzug in einem oder mehreren Abschnitten seines Verlaufs eine erste Wellenform und in zumindest einem anderen Abschnitt seines Verlaufs eine von der ersten Wellenform verschiedene zweite Wellenform aufweist.

13. Bildwandlungsvorrichtung (105), die konfiguriert ist, das Bildwandlungsverfahren (200) nach einem der Ansprüche 1 bis 12 auszuführen.

14. Computerprogramm oder Computerprogrammprodukt, aufweisend Befehle, die bewirken, dass die Bildwandlungsvorrichtung (105) nach Anspruch 13 das Bildwandlungsverfahren (200) nach einem der Ansprüche 1 bis 12 ausführt.

15. Digitales Bild (700) mit integriertem Sicherheitsmerkmal, erhältlich durch das Bildwandlungsverfahren (200) nach einem der Ansprüche 1 bis 12 als Zielbild (455) oder Abbild (165; 465) desselben auf einem Substrat,
und vorzugsweise
wobei das digitale Bild (700) mit integriertem Sicherheitsmerkmal eine Mehrzahl von zueinander parallelen Bildpunktreihen aufweist, die jeweils einen transversalwellenförmigen Verlauf aufweisen, wobei jeweils zueinander benachbarte Bildpunktreihen durch einen Zwischenraum voneinander separiert sind, der sich zumindest abschnittsweise farblich von den durch ihn separierten Bildpunktreihen abhebt, wobei das Sicherheitsmerkmal durch den wellenförmigen Verlauf der Bildpunktreihen und der Zwischenräume definiert ist,
und/oder
wobei das digitale Bild auf einer als Substrat (160) dienenden Dokumentenseite für ein Wert- oder Sicherheitsdokument ausgebildet ist.

## Claims

1. An image conversion method (200) for integration of a security feature into a digital source image (305) in order to generate a target image (455) secured by the integrated security feature, wherein the image conversion method (200) comprises:
acquiring (205) source image data which represent a digital source image (305) to be protected by means of the security feature, which digital source image comprises pixels (315) arranged in a grid of straight parallel rows of pixels (310), each having at least one pixel value per pixel (315);
generating (210) intermediate image data, which represent an intermediate image (400) that results from the source image (305) by applying a distortion rule, according to which, for each row of pixels (310) of the source image (305), the respective pixel values of pixels (315) of the row of pixels (310) are transferred within the grid along a direction which is angled to the row of pixels (310), in particular perpendicular to the row of pixels (310), to a respective other pixel (325; 500) of the grid which, in relation to the respective pixel (315), is determined or determinable by the distortion rule in such a way that the arrangement (405; 410; 415) of these other pixels (325; 500) in the grid has a transverse waveform;
generating (220) target image data representing the target image (455), wherein:
the intermediate image (400) is scanned in rows of pixels in order to define for each row of pixels of the intermediate image (400) a sequence of pixels (425, 430, 435, 440, 445, 450) that follow each other according to the scanning, the pixel values of which have resulted from the transfer of corresponding pixel values from the source image (305) in accordance with the distortion rule;
each pixel (425, 430, 435, 440, 445, 450) of the sequence is transformed into a respective corresponding pixel (425a, 430a, 435a, 440a, 445a, 450a) of the target image (455) by determining its position in the target image (455) based on its position in the intermediate image (400) by compensating for the distortion suffered by applying the distortion rule when generating the intermediate image (400), so that the arrangement (405; 410; 415) of the respective pixels of each sequence in the target image (455) represents a transverse-wave-shaped wave packet; and
the integrated security feature is defined by the wave packets,
wherein the arrangement (405; 410; 415) of the respective pixels of each sequence in the target image (455) is determined such that each of two adjacent wave packets are separated from each other by a gap; and
wherein the substrate (160) is selected or processed in such a way that it has a color that stands out relative to the average of the colors of the pixels that form the wave packets of the target image (455), which are determined according to the pixel values, in such a way that neighboring wave packets can be visually distinguished.

2. The image conversion method (200) according to claim 1, further including: generating (225) a physical reproduced image (165; 465) of the target image (455) on a surface of a substrate (160), wherein the reproduced image (165; 465) of the target image (455) is generated by serially generating pixels on the substrate (160) by, in order to generate a series of pixels on the substrate (160), which corresponds to a respective sequence of pixels of the target image (455), generating these pixels of the series on the substrate (160) in accordance with the pixel order defined by the sequence of the corresponding pixels of the target image (455).

3. The image conversion method (200) according to claim 2, wherein the physical reproduced image (165; 465) of the target image (455) is generated on the substrate (160) using laser inscription, in which the pixels of the reproduced image (165; 465) are sequentially generated on the substrate (160) using a laser beam (130).

4. The image conversion method (200) according to claim 3, wherein the different positions of the series at which the laser beam (130) strikes the substrate (160) to generate the pixels of the reproduced image (165; 465) are controlled by variable deflection of the laser beam (130) in a mirror-based laser galvanometer (120).

5. The image conversion method (200) according to claim 4, wherein at least one mirror (135; 145) of the laser galvanometer (120) is controlled using a control signal for controlling a respective position of a pixel of the reproduced image (165; 465) to be generated on the substrate (160), which control signal is defined as a function of the compensation that has been determined for that pixel of the intermediate image (400) which corresponds to the pixel of the reproduced image (165; 465) to be generated.

6. The image conversion method (200) according to claim 4 or 5, wherein a laser galvanometer (120) is used for variable deflection of the laser beam (130), in which the inertia of at least one of its mirrors (135; 145) used for deflection is so large that, when imaging the wave packets of the target image (455) by generating the pixels of the reproduced image (165; 465) on the substrate (160), deviations between the reproduced image (165; 465) and the target image (455) arise in the event of abrupt changes in direction along the course of the wave packets.

7. The image conversion method (200) according to any one of the preceding claims, wherein the arrangement (405; 410; 415) of the respective pixels of each sequence in the target image (455) is determined so that it represents a transverse-wave-shaped wave packet (460) which is periodic at least in some portions,
wherein the arrangement (405; 410; 415) of the respective pixels of each sequence in the target image (455) is preferably determined so that it represents a transverse-wave-shaped wave packet (460) which is sinusoidal at least in some portions.

8. The image conversion method (200) according to any one of the preceding claims, wherein each of the wave packets resulting in a respective sequence has at least two inflection points.

9. The image conversion method (200) according to any one of the preceding claims, wherein the grid of pixels of the source image (305) has rows and columns, and the resolution of the rows is different from the resolution of the columns.

10. The image conversion method (200) according to claim 9, wherein the resolution of the source image (305) in the direction orthogonal to the rows of pixels is at most 70% of the resolution in the direction running along the rows of pixels.

11. The image conversion method (200) according to claim 9 or 10, wherein the resolution of the source image (305) in the direction orthogonal to the rows of pixels is at least 200 pixels per inch or per 2.54 cm, PPI.

12. The image conversion method (200) according to any one of the preceding claims, wherein the pixels of the target image (455) are determined in such a way that their respective extents are the same along and orthogonal to the transverse direction of the wave packets,
and/or
wherein the distortion rule is defined such that when it is applied to rows of pixels of the source image (305), at least for a subset of the rows of pixels, the wave packet respectively resulting from this has a first waveform in one or more portions of its course and a second waveform different from the first waveform in at least another portion of its course.

13. An image conversion device (105) which is configured to carry out the image conversion method (200) according to any one of claims 1 to 12.

14. A computer program or computer program product, comprising instructions which cause the image conversion device (105) according to claim 13 to carry out the image conversion method (200) according to any one of claims 1 to 12.

15. A digital image (700) with an integrated security feature, obtainable by the image conversion method (200) according to any one of claims 1 to 12 as a target image (455) or reproduced image (165; 465) of the same on a substrate,
and preferably
wherein the digital image (700) with an integrated security feature has a plurality of mutually parallel rows of pixels, each of which has a transverse-wave-shaped course, wherein adjacent rows of pixels are separated from one another by a gap which, as regards its color, stands out at least in some portions with respect to the rows of pixels separated thereby, wherein the security feature is defined by the wave-shaped course of the rows of pixels and of the gaps between them,
and/or
wherein the digital image is formed on a document page serving as a substrate (160) for a value document or a security document.

## Revendications

1. Procédé de conversion d'image (200) pour intégrer une caractéristique de sécurité dans une image source (305) numérique pour produire une image cible (455) sécurisée par la caractéristique de sécurité intégrée, dans lequel le procédé de conversion d'image (200) présente :
l'acquisition (205) de données d'image source qui représentent une image source (305) numérique à protéger au moyen de la caractéristique de sécurité, qui présente des points d'image (315) disposés dans une grille de rangées de points d'image (310) droites parallèles les unes aux autres avec respectivement au moins une valeur de point d'image par point d'image (315) ;
la génération (210) de données d'image intermédiaire qui représentent une image intermédiaire (400) qui résulte de l'image source (305) par application d'une prescription de distorsion selon laquelle, pour chaque rangée de points d'image (310) de l'image source (305), les valeurs de points d'image respectives de points d'image (315) de la rangée de points d'image (310) sont transmises à l'intérieur de la grille le long d'une direction s'étendant de manière angulaire, en particulier orthogonale, par rapport à la rangée de points d'image (310) à un respectivement autre point d'image (325 ; 500) de la grille déterminé ou déterminable par la prescription de distorsion par rapport au point d'image (315) respectif, de sorte que l'agencement (405 ; 410 ; 415) de ces autres points d'image (325 ; 500) présente une forme d'onde transversale dans la grille ;
la production (220) de données d'image cible qui représentent l'image cible (455), dans lequel :
l'image intermédiaire (400) est balayée en rangées de points d'image pour que, par rangée de points d'image de l'image intermédiaire (400), une séquence de points d'image (425, 430, 435, 440, 445, 450) successifs selon le balayage, dont les valeurs de points d'image résultent de la transmission de valeurs de points d'image correspondantes à partir de l'image source (305) conformément à la prescription de distorsion ;
chaque point d'image (425, 430, 435, 440, 445, 450) de la séquence dans un point d'image (425a, 430a, 435a, 440a, 445a, 450a) respectivement correspondant à celui-ci de l'image cible (455) est transformé en établissant, à partir de sa position dans l'image intermédiaire (400), sa position dans l'image cible (455), par compensation de la distorsion subie par application de la prescription de distorsion lors de la génération de l'image intermédiaire (400), de sorte que l'agencement (405 ; 410 ; 415) des points d'image respectifs de chaque séquence dans l'image cible (455) représente un train d'ondes en forme d'ondes transversales ; et
la caractéristique de sécurité intégrée est définie par les trains d'ondes,
dans lequel l'agencement (405 ; 410 ; 415) des points d'image respectifs de chaque séquence dans l'image cible (455) est établi de sorte que deux trains d'ondes adjacents sont chacun séparés l'un de l'autre par un espace intermédiaire, et
dans lequel le substrat (160) est choisi ou traité de sorte qu'il présente une couleur qui se démarque de la valeur moyenne des couleurs des points d'image déterminées selon les valeurs de point d'image qui forment les trains d'onde de l'image cible (455), de sorte que des trains d'ondes adjacents sont optiquement distinguables.

2. Procédé de conversion d'image (200) selon la revendication 1, présentant en outre :
la production (225) d'une image (165 ; 465) physique de l'image cible (455) sur une surface d'un substrat (160), dans lequel l'image (165 ; 465) de l'image cible (455) est produite par génération en rangée de points d'image sur le substrat (160) du fait que, afin de générer ainsi une rangée de points d'image sur le substrat (160) qui correspond à une séquence respective de points d'image de l'image cible (455), ces points d'image de la rangée sont produits sur le substrat (160) conformément à l'ordre de points d'image défini par la séquence des points d'image correspondants de l'image cible (455).

3. Procédé de conversion d'image (200) selon la revendication 2, dans lequel la production de l'image (165 ; 465) physique de l'image cible (455) sur le substrat (160) s'effectue au moyen d'une inscription laser dans laquelle les points d'image de l'image (165 ; 465) sur le substrat (160) sont générés séquentiellement à l'aide d'un faisceau laser (130).

4. Procédé de conversion d'image (200) selon la revendication 3, dans lequel les différentes positions de la rangée où le faisceau laser (130) rencontre le substrat (160) pour générer les points d'image de l'image (165 ; 465) sont commandées au moyen d'une déviation variable du faisceau laser (130) dans un galvanomètre laser (120) à miroir.

5. Procédé de conversion d'image (200) selon la revendication 4, dans lequel au moins un miroir (135 ; 145) du galvanomètre laser (120) est commandé pour commander une position respective d'un point d'image à produire de l'image (165 ; 465) sur le substrat (160) à l'aide d'un signal de commande qui est défini en fonction de la compensation qui a été déterminée pour le point d'image de l'image intermédiaire (400) qui correspond au point d'image à produire de l'image (165 ; 465).

6. Procédé de conversion d'image (200) selon la revendication 4 ou 5, dans lequel un galvanomètre laser (120) est utilisé pour dévier de manière variable le faisceau laser (130), selon lequel l'inertie de masse d'au moins l'un de ses miroirs (135 ; 145) utilisés pour la déviation est telle que lors de l'imagerie des trains d'ondes de l'image cible (455) par génération des points d'image de l'image (165 ; 465) sur le substrat (160) lors de changements brusques de direction le long du tracé des trains d'ondes, des écarts de l'image (165 ; 465) par rapport à l'image cible (455) se produisent.

7. Procédé de conversion d'image (200) selon l'une quelconque des revendications précédentes, dans lequel l'agencement (405 ; 410 ; 415) des points d'image respectifs de chaque séquence dans l'image cible (455) est établi de sorte qu'il représente un train d'ondes (460) en forme d'ondes transversales qui est périodique au moins sur certaines sections,
dans lequel l'agencement (405 ; 410 ; 415) des points d'image respectifs de chaque séquence dans l'image cible (455) est de préférence établi de sorte qu'il représente un train d'ondes (460) en forme d'ondes transversales qui est sinusoïdal au moins sur certaines sections.

8. Procédé de conversion d'image (200) selon l'une quelconque des revendications précédentes, dans lequel chacun des trains d'onde résultant d'une séquence respective présente au moins deux points de retournement.

9. Procédé de conversion d'image (200) selon l'une quelconque des revendications précédentes, dans lequel la grille des points d'image de l'image source (305) présente des lignes et des colonnes, et la résolution des lignes est différente de la résolution des colonnes.

10. Procédé de conversion d'image (200) selon la revendication 9, dans lequel la résolution de l'image source (305) dans la direction s'étendant orthogonalement par rapport aux rangées de points d'image est de maximum 70 % de la résolution dans la direction s'étendant le long des rangées de points d'image.

11. Procédé de conversion d'image (200) selon la revendication 9 ou 10, dans lequel la résolution de l'image source (305) dans la direction s'étendant orthogonalement par rapport aux rangées de points d'image est d'au moins 200 points d'image par pouce ou 2,54 cm, PPI, respectivement.

12. Procédé de conversion d'image (200) selon l'une quelconque des revendications précédentes, dans lequel les points d'image de l'image cible (455) sont établis de sorte que leur extension respective soit égale le long de et orthogonalement par rapport à la direction transversale des trains d'onde,
et/ou
dans lequel la prescription de distorsion est ou devient définie de sorte que lors de son application sur des rangées de points d'image de l'image source (305), le train d'ondes en résultant respectivement présente une première forme d'onde dans une ou plusieurs sections de son tracé et une deuxième forme d'onde différente de la première forme d'onde dans au moins une autre section de son tracé pour au moins un sous-ensemble des rangées de points d'image.

13. Dispositif de conversion d'image (105) qui est configuré pour exécuter le procédé de conversion d'image (200) selon l'une quelconque des revendications 1 à 12.

14. Programme informatique ou produit de programme informatique, présentant des instructions qui ont pour effet que le dispositif de conversion d'image (105) selon la revendication 13 exécute le procédé de conversion d'image (200) selon l'une quelconque des revendications 1 à 12.

15. Image numérique (700) avec caractéristique de sécurité intégrée, pouvant être obtenue par le procédé de conversion d'image (200) selon l'une quelconque des revendications 1 à 12 en tant qu'image cible (455) ou image (165 ; 465) de celle-ci sur un substrat,
et de préférence
dans laquelle l'image numérique (700) avec caractéristique de sécurité intégrée présente une pluralité de rangées de points d'image parallèles les unes aux autres, qui présentent chacune un tracé en forme d'ondes transversales, dans laquelle des rangées de points d'image adjacentes les unes aux autres sont chacune séparées les unes des autres par un espace intermédiaire qui se démarque au moins sur certaines section en couleur des rangées de points d'image séparées par celui-ci, dans laquelle la caractéristique de sécurité est définie par le tracé ondulé des rangées de points d'image et des espaces intermédiaires,
et/ou
dans laquelle l'image numérique est réalisée sur une page de document servant de substrat (160) pour un document de valeur ou de sécurité.
